(19) Europäisches Patentamt / European Patent Office / Office européen des brevets

(11) **EP 1 275 551 B1**

(12) **FASCICULE DE BREVET EUROPEEN**

(45) Date de publication et mention
de la délivrance du brevet:
**02.09.2015 Bulletin 2015/36**

(51) Int Cl.:
***F02D 11/10*** *(2006.01)*     ***B60K 6/445*** *(2007.10)*
***B60W 10/06*** *(2006.01)*

(21) Numéro de dépôt: **02291680.3**

(22) Date de dépôt: **05.07.2002**

(54) **Dispositif de contrôle du point de fonctionnement du groupe motopropulseur d'un véhicule**

Vorrichtung zur Regelung des Arbeitspunktes eines Antriebsstrangs in einem Kraftfahrzeug

Device for controlling the operating point of a motor vehicle propulsion unit

(84) Etats contractants désignés:
**BE DE ES GB IT**

(30) Priorité: **12.07.2001 FR 0109262**

(43) Date de publication de la demande:
**15.01.2003 Bulletin 2003/03**

(73) Titulaire: **Renault s.a.s.**
**92100 Boulogne Billancourt (FR)**

(72) Inventeurs:
• **Pichon, Yves**
**92100 Boulogne Billancourt (FR)**
• **Roudeau, Frédéric**
**9400 Vitry sur Seine (FR)**
• **Kefti-Cherif, Ahmed**
**78190 Trappes (FR)**
• **Von Wissel, Dirk**
**92200 Neuilly sur Seine (FR)**
• **Royer, Laurent**
**92120 Montrouge (FR)**

(56) Documents cités:
EP-A- 1 065 362    DE-A- 19 648 055
DE-A- 19 703 863    US-A- 6 068 574

**Description**

La présente invention concerne un dispositif de contrôle du point de fonctionnement du groupe motopropulseur (gmp) d'un véhicule.

Dans l'état de la technique, le conducteur agissant sur la pédale d'accélérateur, dans un moteur à combustion interne à carburateur, contrôle simplement par le degré d'enfoncement de la pédale l'état d'ouverture du papillon du carburateur. Il en résulte un changement du point de fonctionnement du groupe motopropulseur exprimé par un point dans un diagramme associant vitesse de rotation du moteur (dit aussi régime moteur) et couple sur l'arbre du moteur.

Dans le document D1 - DE - 197 03 863, il est décrit un moyen de contrôle de manière optimale relativement à une fonction de coût et à une fonction cible qui sont relatives à un groupe motopropulseur déterminé. Sur la base d'une commande de pédale d'accélérateur, une consigne optimale de couple moteur et de rapport de transmission est élaborée.

On s'est aperçu que cette façon de contrôler le point de fonctionnement du groupe motopropulseur demandait à être améliorée tout en conservant le respect de contraintes essentielles comme la limitation de la consommation en énergie du groupe motopropulseur ou la réduction d'émissions de produits de combustion. Parmi les améliorations demandées, se trouve la prise en compte des particularités comportementales du conducteur qui peut demander à ressentir un comportement général du véhicule à sa volonté ou qui respecte ses critères comportementaux. En particulier, le conducteur peut choisir un profil de comportement sportif ou au contraire un comportement mieux adapté à un environnement urbain de circulation chargée.

Par ailleurs, les groupes motopropulseurs conçus aujourd'hui sont capables de suivre des diagrammes de fonctionnement adaptés à des comportements extrêmement variés du véhicule. Il est ainsi demandé qu'un véhicule de type donné présente lui-même un comportement particulier adapté à une catégorie de clientèle à laquelle le véhicule est adapté, sans qu'il soit absolument nécessaire de changer de groupe motopropulseur, mais au contraire tout en conservant un seul groupe motopropulseur, même s'il est décliné selon une gamme de plusieurs puissances. De cette façon, le coût de conception d'une gamme de véhicules pourra être réduit, puisqu'un seul groupe motopropulseur peut être utilisé sur toute la gamme alors que chaque type de véhicule de ladite gamme présentera un comportement caractéristique.

Enfin, il est aujourd'hui nécessaire d'intégrer aussi dans le comportement du véhicule l'action d'un conducteur virtuel constitué par un automate de conduite, que ce soit un contrôleur de vitesse de croisière ou un automate prenant le contrôle du véhicule en cas de situation de danger ou un calculateur de trajectoires. De ce fait, il est hautement nécessaire que le point de fonctionnement du groupe motopropulseur du véhicule puisse être contrôlé par un dispositif de contrôle dans lequel les paramètres de commande et les paramètres destinés à contrôler le point de fonctionnement du groupe motopropulseur soit modulaire au sens de la programmation.

Selon un autre point de vue de l'invention, la baisse de la consommation en énergie des véhicules est un objectif essentiel pour la production de véhicules à la fois pour des questions réglementaires et de coût d'exploitation de chaque véhicule. Une technique envisagée a été d'équiper un véhicule avec un groupe motopropulseur comportant une partie thermique constituée d'un moteur à explosion et d'une transmission mécanique et d'une partie électrique avec au moins une machine électrique alimentée ou non à travers un élément de stockage d'énergie électrique comme une batterie.

La présente invention fournit des moyens pour appliquer une stratégie permettant le contrôle optimal du groupe motopropulseur tout en ayant pour objectif de tirer le meilleur gain en consommation avec ou sans le respect d'une contrainte de réduction de la pollution.

Ainsi, dans l'analyse de l'invention, le groupe motopropulseur qui entraîne le véhicule est commandé essentiellement par deux catégories de commandes :

- les commandes reflétant la volonté du conducteur généralement exprimée par le degré d'enfoncement de la pédale d'accélérateur ;
- les commandes reflétant l'état de l'environnement du véhicule comme l'état de la chaîne de transmission et éventuellement la vitesse du véhicule et d'autres paramètres de ce genre.

La présente invention apporte ces améliorations à l'état de la technique en ce qu'elle concerne un dispositif de contrôle du point de fonctionnement du groupe motopropulseur. Le dispositif de contrôle comporte essentiellement :

- un premier moyen ou module IVC pour, en fonction d'une interprétation de la volonté du conducteur et de l'état de l'environnement du véhicule, générer un signal représentatif d'une consigne de couple à la roue immédiatement délivrable par le groupe motopropulseur.
- un second moyen ou module OPF pour produire les coordonnées d'un point de fonctionnement du groupe motopropulseur choisi en fonction du signal représentatif d'une consigne de couple à la roue immédiatement délivrable par le groupe motopropulseur produit par le module IVC d'une part et en fonction d'un signal représentatif de l'état de l'environnement du véhicule produit par un module de prise en compte de l'environnement du véhicule, d'autre part, le point de fonctionnement étant déterminé dans un domaine de fonctionnement optimal du groupe motopropulseur calculé sur la base de contraintes prédéterminées comprenant la consommation de carburant, des contraintes d'agrément de conduite et des contraintes physiques préenregistrées comme les limitations des différents organes du groupe motopropulseur et de l'émission de polluants ; et

- un troisième moyen ou module COS pour traduire les coordonnées de ce point de fonctionnement en signaux de commande adaptés au groupe motopropulseur.

Selon un aspect de l'invention, le signal représentatif d'une consigne de couple à la roue immédiatement délivrable par le groupe motopropulseur est produit par un générateur de consigne de couple à la roue qui comporte :

- un générateur d'une première composante du signal représentatif d'une consigne de couple à la roue immédiatement délivrable, dite couple statique correspondant au couple maximal disponible au groupe motopropulseur dont le conducteur voudrait disposer instantanément,
- un générateur d'une seconde composante du signal représentatif d'une consigne de couple à la roue immédiatement délivrable, dite couple dynamique correspondant au couple du groupe motopropulseur que le conducteur demande instantanément.

Selon un autre aspect de l'invention, le module IVC du dispositif de contrôle comporte aussi un générateur d'un signal représentatif d'une limitation de variation du régime du moteur moyen pour réduire les variations acoustiquement gênantes du bruit de moteur que le conducteur attend.

Selon un autre aspect de l'invention, le générateur d'un signal représentatif d'une limitation de variation du régime du moteur du module IVC comporte :

- un générateur d'une première composante du dit signal pour limiter les variations de régime moteur vers le sens de la réduction ; et
- un générateur d'une seconde composante du dit signal pour limiter les variations de régime moteur vers le sens de l'augmentation.

Selon un autre aspect de l'invention, le générateur de couple statique, le générateur de couple dynamique et/ou le générateur d'un signal représentatif d'une limitation de variation du régime moteur comportent des organes d'entrée connectés à un module d'enregistrement des caractéristiques du véhicule et/ou du conducteur, à un module d'interface homme-machine transmettant les commandes produites par le conducteur et/ou par un automate de pilotage, et à un module de détection de l'état de l'environnement du véhicule, qui reçoit les valeurs descriptives de l'environnement du véhicule d'une pluralité de capteurs.

Selon un autre aspect de l'invention, les générateurs de couple statique, de couple dynamique et/ou de limitation des variations de régime moteur travaillent à des fréquences supérieures à la fréquence d'entrée des organes d'entrée du module OPF et/ou délivrent des valeurs de calculs intermédiaires lors d'un cycle de calcul, de sorte que sur des organes d'entrée intermédiaire du second module OPF sont disponibles des valeurs intermédiaires des données d'entrée dudit second module OPF qui sont transmises à des modules de calcul de modes transitoires du groupe motopropulseur et/ou des modules de calcul de valeurs d'anticipation des coordonnées du point de fonctionnement du groupe motopropulseur.

Selon un autre aspect de l'invention, le second moyen ou module OPF comporte un générateur de valeurs de régime moteur et un générateur de valeurs de couple du groupe motopropulseur pour déterminer le point de fonctionnement du groupe motopropulseur, le régime moteur étant déterminé par un moyen exécutant une première fonction prédéterminée et le couple du groupe motopropulseur étant déterminé par un moyen exécutant une seconde fonction prédéterminée, les première et seconde fonctions mettant en oeuvre le critère d'optimisation et les contraintes de détermination du point de fonctionnement du groupe motopropulseur.

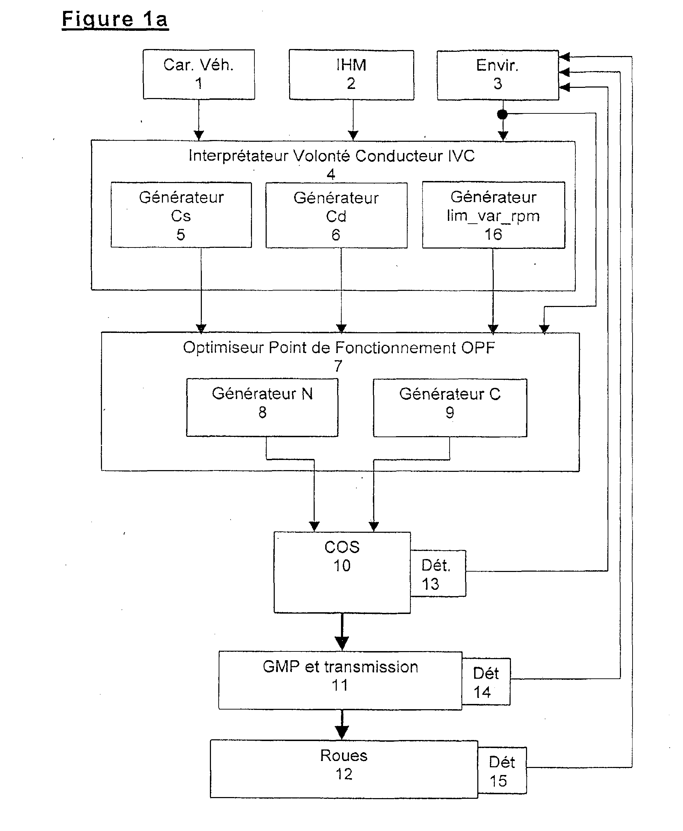

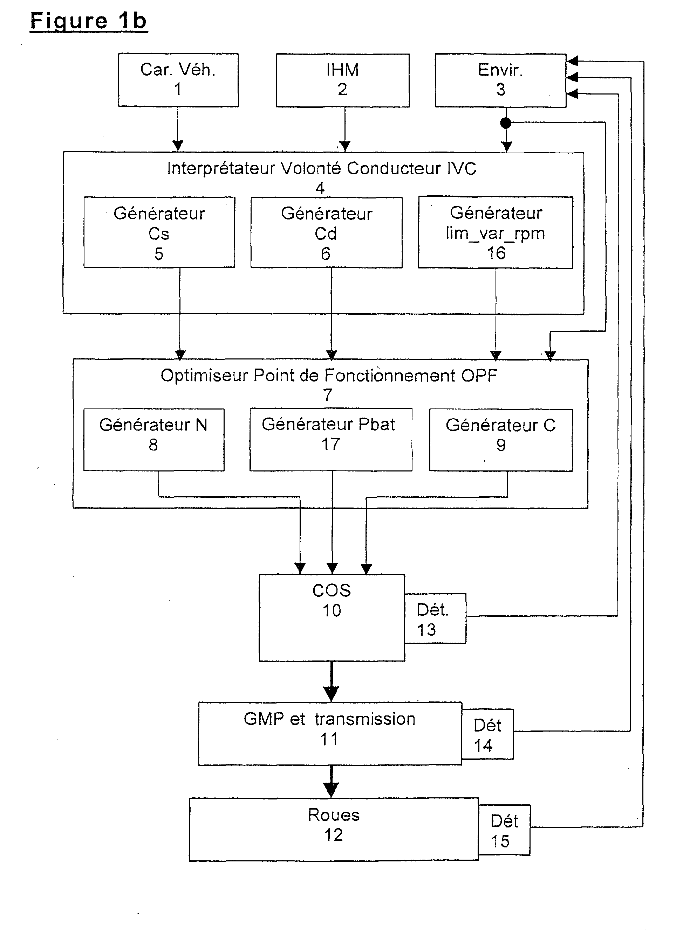

Selon un autre aspect de l'invention, le module COS comporte un générateur de consignes adaptées au type de groupe motopropulseur gmp qu'il commande. Il en résulte que le dispositif de contrôle de l'invention peut être commun à l'ensemble d'une gamme de véhicules. Par programmation du module COS, le dispositif de contrôle peut être adapté à n'importe quel groupe motopropulseur parce qu'il reçoit en entrée deux (mode de réalisation de la figure 1a : N, C) ou trois (mode de réalisation de la figure 1b : N, C, Pbat) paramètres définissant à chaque instant le point de fonctionnement du groupe motopropulseur. Puis, le module COS convenablement programmé, notamment en recevant en configuration des paramètres caractéristiques du groupe motopropulseur qu'il est destiné à commander, traduit en signaux de commande adapté le point de fonctionnement du groupe motopropulseur précédemment calculé par les modules IVC et OPF.

Ainsi, pour un groupe motopropulseur comportant un moteur thermique à explosion, le module COS comporte un générateur de valeurs de couple moteur et un générateur de rapports de démultiplication d'une boîte de vitesses pour déterminer le point de fonctionnement du groupe motopropulseur comme donnée d'un doublet (*Cmt, Rboite*) du couple moteur *Cmt* et du rapport de boîte sélectionné *Rboite*.

Pour un groupe motopropulseur hybride, comportant un moteur thermique à explosion et au moins une machine électrique pouvant travailler en moteur et au moins un système de découplage de l'énergie mécanique produite par le moteur thermique et échangée avec au moins une machine électrique et les roues du véhicule, le groupe motopropulseur pouvant comporter N systèmes de découplage ; le module COS comporte un générateur de valeurs de couple du moteur thermique *Cmt*, première coordonnée du point de fonctionnement, un générateur de valeurs de couple du moteur électrique *Cme*, seconde coordonnée du point de fonctionnement et un générateur de N signaux de commande pour les systèmes de découplage mécanique (*Rdécouplage*(i) ; i), de sorte que le point de fonctionnement est déterminé par les (N + 2) coordonnées précitées.

D'autres caractéristiques et avantages de l'invention apparaîtront à la lecture de la description détaillée qui suit pour la compréhension de laquelle on se reportera aux dessins annexés dans lesquels :

- les figures 1a et 1b sont des schémas blocs de deux modes de réalisation d'un dispositif de contrôle selon l'invention ;
- la figure 2 est un graphique expliquant les deux composantes d'une valeur de consigne de couple à la roue du dispositif de contrôle selon l'invention ;
- la figure 3 est un schéma bloc expliquant la structure d'un groupe motopropulseur électromécanique destiné à être commandé par le dispositif de contrôle selon l'invention
- les figures 4 et 7 sont des schémas blocs pour expliciter divers modes de réalisation d'un générateur de couple statique dans le dispositif de contrôle selon l'invention ;
- la figure 8 est un schéma bloc représentant un mode de réalisation d'un générateur de couple dynamique dans le dispositif de contrôle selon l'invention ;
- les figures 9 à 11 sont des schémas blocs pour expliciter divers modes de réalisation d'un circuit pour calculer des limites de variations de régime moteur thermique utilisées dans le dispositif de contrôle selon l'invention ;
- les figures 12a et 12b représentent des schémas pour expliciter deux variantes pour calculer des paramètres de commande du véhicule sur la base des paramètres de limites de variations de régime moteur thermique des figures précédentes ;
- les figures 13 et 14 représentent des graphes définissant des domaines de variations de différents paramètres pour établir un domaine de fonctionnement optimal selon l'invention ;
- la figure 15 représente un schéma bloc d'un moyen de calcul du domaine de fonctionnement optimal défini à l'aide des figures 13 et 14.

Aux figures 1a et 1b, on a représenté des schémas blocs de deux modes de réalisation d'un dispositif de contrôle selon l'invention. Le dispositif de contrôle selon l'invention comporte essentiellement :

- un premier moyen ou module interpréteur de la volonté du conducteur IVC 4 ;
- un second moyen ou module optimiseur du point de fonctionnement OPF 7 ;
- un troisième moyen ou module coordinateur du fonctionnement du groupe motopropulseur pour la réalisation du point de fonctionnement COS 10.

Le premier moyen ou module IVC 4 comporte un générateur 5, 6 d'une consigne de couple à la roue que doit fournir le groupe motopropulseur 11 commandé par le dispositif de contrôle de l'invention en fonction notamment des commandes du conducteur. Cette consigne permet à la fois de synthétiser la volonté du conducteur et donc de tenir compte de sa personnalité, mais aussi des caractéristiques du véhicule, particulièrement du comportement normal de son groupe motopropulseur.

Dans un mode préféré de réalisation de l'invention, le générateur 5, 6 d'une consigne de couple à la roue comporte un générateur 5 d'une composante statique de couple Cs, dite couple statique CS et un générateur 6 d'une composante dynamique de couple Cd, dite couple dynamique. Les composantes statique Cd et dynamique Cs de couple sont estimées à la roue du véhicule.

Le module IVC 4 comporte aussi un générateur 16 d'une composante de limitation de variations de régime moteur. La composante de limitation est estimée en variations de régime dans le temps. Elle correspond à une commande de comportement du moteur en fonction de l'interprétation de la volonté du conducteur et de l'état de l'environnement du véhicule.

Le module IVC 4 est connecté à trois modules d'entrée qui sont respectivement :

- un organe 1 d'enregistrement des caractéristiques du véhicule qui maintient en particulier les profils de comportement du véhicule programmés par le constructeur pour caractériser le comportement du véhicule livré à un client ;

- un organe IHM 2 réalisant l'interface entre le conducteur humain et le reste du véhicule selon les procédures connues sous la technique des interfaces homme-machine IHM ;

- un organe 3 de prise en compte de l'environnement du véhicule dont les signaux de sortie permettent au dispositif de contrôle de l'invention de tenir compte de l'état du véhicule et de sa situation dans l'environnement.

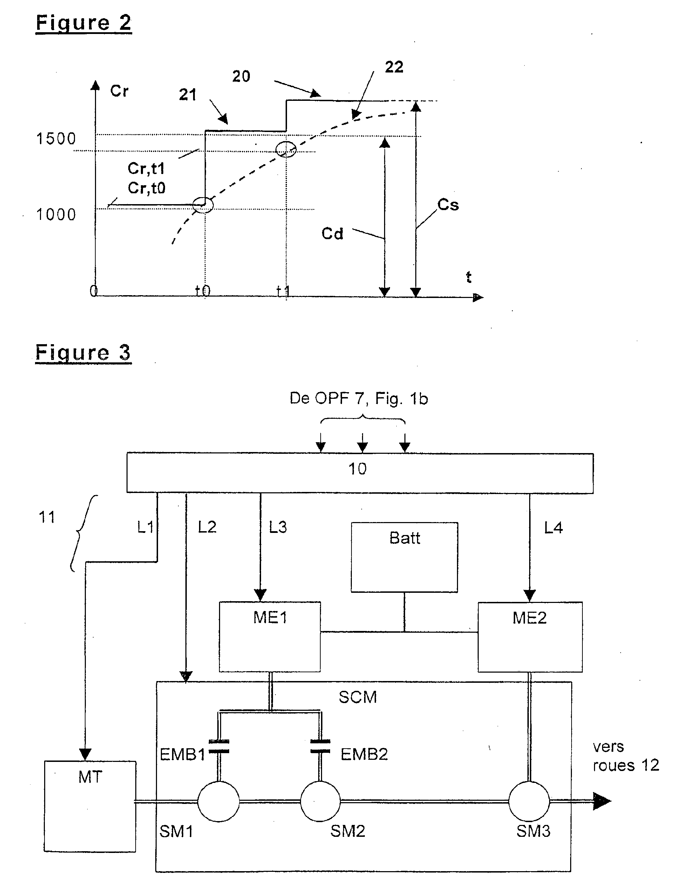

A la figure 2, on a représenté un diagramme dans le temps des variations du couple à la roue dans un exemple d'utilisation d'un dispositif de contrôle selon l'invention. En abscisse, ont été portés les instants t et en ordonnée les valeurs successives de couple à la roue. Le couple à la roue Cr évolue au cours du temps en fonction des commandes du conducteur. Un exemple d'évolution du couple Cr est représenté par la courbe 22 en tirets.

En se plaçant à la date t0, le couple à la roue à la date t0 présente la valeur instantanée Cr_t0 et à cet instant précis t0, en fonction des caractéristiques enregistrées du conducteur, des caractéristiques enregistrées du véhicule et de commandes et paramètres détectés de l'environnement, deux composantes Cs et Cd de la consigne de couple à la roue sont estimées à chaque instant t0.

Les deux composantes de la consigne de couple à la roue sont respectivement la valeur de couple dynamique Cd qui peut être réalisée à la date t1 successive et la valeur de couple statique Cd qui doit être appliquée à la date t1. En pratique, à la date t1, le couple à la roue sera toujours inférieur à ses valeurs de consigne et au plus égal à l'une ou l'autre d'entre elles.

La valeur du couple à la roue Cr_t1 est un point de la courbe 22. Il correspond à une consigne qui a été effectivement exécutée après avoir été imposée au groupe motopropulseur 11 par le dispositif de contrôle de l'invention.1 - 10.

Le couple dynamique est une consigne qui est déterminée en fonction des paramètres précités tandis que le couple statique correspond à une consigne 20 supérieure ainsi qu'il sera déterminé plus loin.

A la figure 3, on a représenté un schéma bloc illustrant un groupe motopropulseur commandé par un dispositif de contrôle selon l'invention.

A la figure 3 est représenté le seul troisième module COS 10 du dispositif de contrôle de l'invention qui reçoit les paramètres de fonctionnement optimisés du second module OPF 7. Dans le mode de réalisation de la figure 1a, le troisième module COS 10 reçoit deux arguments de commande de régime moteur N et de couple à la roue C, alors qu'il reçoit trois arguments de commande de régime moteur N, de couple à la roue C et de puissance batterie Pbat dans le cas d'une motorisation de la figure 1b.

Ainsi qu'il sera décrit plus loin, le troisième module COS 10 du dispositif de contrôle de l'invention produit des signaux de commande de quatre lignes de signaux, respectivement L1, L2, L3 et L4 à destination des organes de commande du groupe motopropulseur 11.

Dans le mode de réalisation de la figure 3, le groupe motopropulseur 11 comporte essentiellement un moteur thermique MT constitué par un moteur thermique à explosion qui reçoit des signaux de commande L1 du troisième module COS 10. Les signaux de commande du moteur thermique comportent essentiellement le degré d'ouverture du papillon d'admission du carburateur dans un mode particulier de réalisation, c'est-à-dire une commande de débit de carburant qui, selon les contraintes de réduction de l'émission de polluants et de réduction de la consommation doit être déterminée de façon optimale avec les impératifs de consigne de couple et de régime.

Le groupe motopropulseur 11 comporte aussi deux machines électriques ME1 et ME2 qui sont susceptibles de fonctionner au moins une partie de leur temps de fonctionnement comme moteur de traction du véhicule.

Les deux machines électriques ME1 et ME2, ainsi que le moteur thermique MT, sont connectés à un système de changement de mode de transmission SCM.

Le moteur thermique MT comporte un arbre de sortie qui est connecté à un premier système de rassemblement de puissance mécanique SM1 du changement de système de mode SCM dont une autre entrée est connectée à un embrayage EMB1. L'embrayage EMB1 est par ailleurs connecté à l'arbre de sortie du moteur électrique ME1.

Un second système de rassemblement de puissance mécanique SM2 présente une première entrée connectée à la sortie du système de couplage SM1 et présente une seconde entrée couplée à un embrayage EMB2 dont l'entrée est elle-même connectée à l'arbre de sortie de la machine électrique ME1.

La sortie du système de couplage mécanique SM2 est couplé à une entrée d'un troisième système de rassemblement de puissance mécanique SM3 dont l'autre entrée est connectée à l'arbre de sortie du second moteur électrique ME2.

La sortie du troisième système de rassemblement de puissance mécanique SM3 est connectée par des moyens connus aux roues d'entraînement 12 du véhicule.

Chaque système de rassemblement de puissance mécanique SM1 à SM3 est composé de manière connue par des pignons , des trains épicycloïdaux et des arbres de rotation.

Les machines électriques ME1 et ME2 sont dotées de circuits d'alimentation et de contrôle de l'alimentation électrique - (non représentés) qui sont connectés au troisième module COS 10 du dispositif de contrôle de l'invention d'une part et par des lignes électriques convenables à une source de stockage d'énergie électrique comme une batterie BATT, d'autre part.

Il est clair que dans le mode de réalisation de la figure 3, au moins l'une des machines électriques ME1 ou ME2 peut fonctionner en récupération d'énergie pour recharger la batterie.

Le dispositif de contrôle de l'invention est particulièrement adapté à gérer les contraintes de confort de l'utilisateur d'une part et les contraintes de consommation et de réduction de l'émission d'agents polluants par le moteur thermique MT d'autre part.

Les dispositifs de contrôle (non représentés) de l'alimentation électrique des machines électriques ME1 et ME2 sont respectivement connectés par des lignes L3 et L4 au troisième module COS 10 du dispositif de contrôle de l'invention.

Ces deux lignes L3 et L4 introduisent des signaux de commande pour déterminer l'intensité et/ou la tension d'alimentation de chaque machine électrique ME1 ou ME2 de façon à déterminer un point de fonctionnement en couple et vitesse de rotation des machines électriques, quand elles fonctionnent en moteur ou en génératrice.

Le système de changement de mode SCM permet de changer le mode de transmission selon le principe des transmissions infiniment variables que le schéma de la figure 3 indique.

Les signaux de commande transmis par une ligne L2 connectée à une sortie convenable du troisième module COS 10 sont constitués essentiellement par des signaux tout ou rien pour embrayer ou débrayer les deux embrayages EMB1 et EMB2.

En revenant aux figures 1a et 1b, le générateur 5 de couple statique Cs produit un signal représentatif du couple statique à la roue demandé. Selon l'invention, la composante statique de couple demandé à la roue ou couple statique en bref, est définie comme le couple maximal que le conducteur pourrait demander et que le groupe motopropulseur doit rendre immédiatement disponible au niveau des roues en fonction :

- d'une liste enregistrée de paramètres définissant le profil du conducteur, selon en particulier qu'il s'agit d'un conducteur humain ou d'un conducteur virtuel constitué par un automate de conduite ;
- d'une liste enregistrée de paramètres définissant le profil du véhicule dans le registre 1 des caractéristiques du véhicule ;
- de l'état de l'environnement du véhicule ainsi qu'il ressort de mesures faites sur l'état du véhicule dans son environnement.

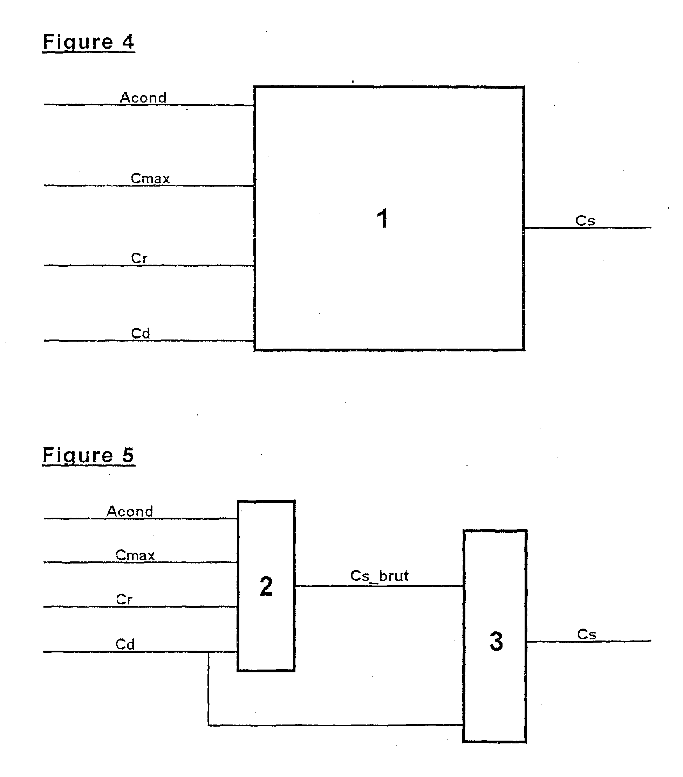

On va maintenant décrire un mode de réalisation préféré du générateur 5 de composante statique du couple à la roue demandé. La figure 4 représente le premier niveau d'une telle réalisation. Le générateur 5 est alimenté en permanence avec quatre informations :

- le paramètre Acond représente le degré d'activité du conducteur estimé ou mesuré (en %) ;
- le paramètre Cd représente la composante dynamique Cd du couple à la roue demandé (en N.m). L'obtention d'une telle composante est décrite plus loin.
- le paramètre Cmax représente le couple maximum que le groupe motopropulseur gmp peut fournir au régime à la roue actuel (en N.m).
- le paramètre Cr représente le couple résistant estimé ou mesuré à vaincre pour maintenir le véhicule à vitesse constante (en N.m).

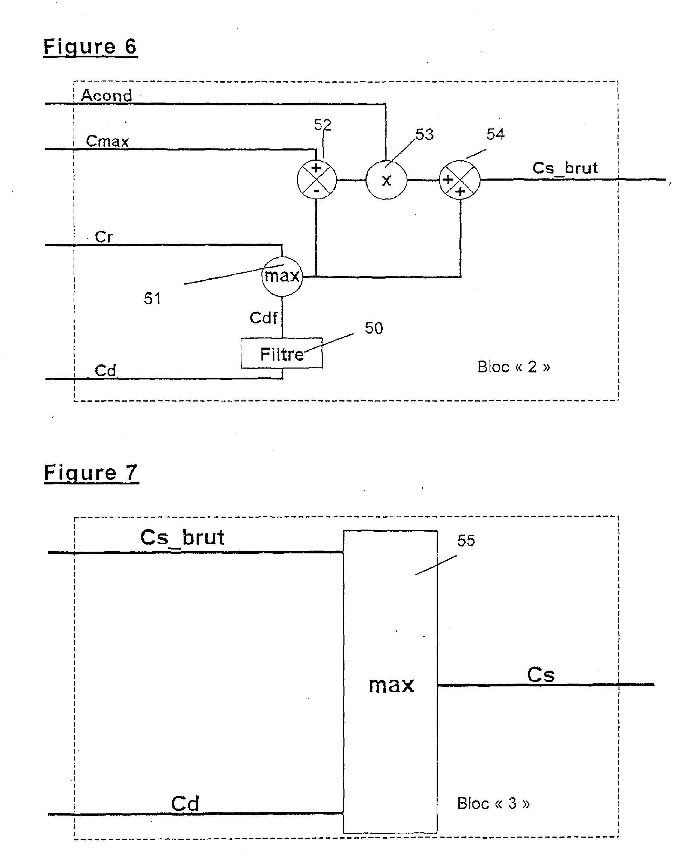

En se référant à la figure 5, la production de la composante statique de couple Cs est exécutée par deux blocs référencés bloc « 2 » et bloc « 3 ». Le bloc « 2 » reçoit en entrée les quatre paramètres précités Acond, Cd, Cmax et Cr, présentés en entrée du générateur 5 de couple statique Cs. Le bloc « 2 », représenté à la figure 6, est constitué par un générateur pour construire une première valeur brute Cs_brut de la composante statique du couple à la roue demandé. Celle-ci peut s'exprimer sous la forme littérale suivante :

$$\text{Cs\_brut} = \text{MAX}(\text{Cr, Cdf}) + \text{Acond}^{*}[\text{Cmax} - \text{MAX}(\text{Cr, Cdf})]$$

où Cdf est le couple dynamique Cd filtré.

Le générateur pour construire une première valeur brute Cs_brut de la composante statique du couple à la roue demandé comporte une borne d'entrée qui reçoit une série de valeurs de couple dynamique produites par le générateur de couple dynamique 6 ainsi qu'il sera décrit plus loin. Pour produire la composante statique de couple à la roue demandé, la composante dynamique du couple à la roue demandé est filtrée, car la composante statique doit évoluer de manière plus lente. Cette dernière n'ayant pas pour but de répondre à une demande immédiate du conducteur, elle doit être le reflet d'une tendance imposée par le comportement du conducteur depuis une période prédéterminée.

Le couple à la roue minimum à fournir est le maximum entre la composante dynamique du couple à la roue demandé filtré (Cdf) et le couple résistant qu'il faut vaincre pour faire avancer le véhicule (Cr), ceci afin d'assurer, dans les phases de demande de ré-accélération, que le groupe motopropulseur gmp est en mesure d'arrêter instantanément la décélération du véhicule. Ensuite, en fonction du degré d'activité du conducteur (Acond : 0% = calme, 100%=nerveux), la composante statique du couple à la roue va évoluer entre cette valeur de couple et le couple du groupe motopropulseur gmp maximum disponible au régime actuel à la roue (Cmax).

La consigne de couple du groupe motopropulseur gmp statique finale sera calculée dans le bloc 3, référencé bloc « 3 » à la figure 7. On y opère alors le maximum entre la composante statique du couple à la roue demandé brut calculée dans le bloc 2 (Cs_brut) et la composante dynamique du couple à la roue (Cd). En effet, il est impératif que le groupe motopropulseur gmp travaille sur un point de fonctionnement assurant, en permanence, la fourniture de la composante dynamique du couple à la roue demandé (Cd) selon une relation MAX() choisissant la plus forte des deux valeurs Cs_brut et Cd.

$$Cs = MAX(Cs\_brut, Cd)$$

A la figure 6, on a représenté un mode de réalisation particulier du bloc "2".

A la figure 6, les quatre paramètres d'entrée du générateur du couple statique 5 sont respectivement connectés aux entrées d'un module de filtrage 50, d'une entrée pour prendre le maximum des valeurs présentées MAX 51 d'un additionneur 52 d'un multiplicateur 53.

Le filtre 50 reçoit à une entrée la série des valeurs calculées de consignes de couple dynamique Cd.

Dans un mode de réalisation, le filtre 50 est réalisé par un calculateur de moyenne glissante, la valeur de couple dynamique filtrée Cdf étant constituée par une moyenne arithmétique d'un nombre prédéterminé d'échantillons précédents de valeurs du couple dynamique présenté à l'entrée du filtre 50.

Le module de calcul du maximum MAX 51 présente une première entrée connectée à la sortie du filtre 50 pour recevoir une valeur de couple de dynamique filtrée Cdf et une seconde entrée pour recevoir une valeur de couple résistant à la roue.

La valeur instantanée de couple résistant à la roue Cr présentée à la seconde entrée du module 51 est une valeur qui est mesurée par un capteur disposé sur le véhicule.

Dans un autre mode de réalisation, la valeur du couple résistant Cr est calculée sur la base d'un estimateur logiciel de couple résistant à la roue.

Le module 51 exécute la recherche du maximum entre les deux valeurs présentées à ses entrées et présente la plus grande valeur à sa sortie.

La sortie du module 51 est connectée à une entrée négative d'un additionneur 52 et à une première borne d'entrée positive d'un additionneur 54.

L'entrée positive de l'additionneur 52 qui est connectée à une borne d'entrée Cmax de couple maximum autorisée sur le groupe motopropulseur et calculée à la roue.

Le signal de sortie de l'additionneur 52 représente la différence entre la valeur Cmax et la plus grande des deux valeurs entre le couple résistant Cr et le couple dynamique Cd. La borne de sortie de l'additionneur 52 est connectée à une borne d'entrée d'un multiplieur 53. L'autre borne d'entrée du multiplieur 53 est connectée à une borne d'entrée du paramètre caractéristique du conducteur Acond.

La sortie du multiplieur 53 est connectée à une seconde borne d'entrée positive de l'additionneur 54. La borne de sortie de l'additionneur 54 produit le signal de sortie du bloc "2" comme valeur instantanée du couple statique brut Cs_brut.

A la figure 7, on a représenté un mode de réalisation particulier du bloc "3" de la figure 5.

A la figure 7, le bloc "3" comporte essentiellement un opérateur MAX 55 qui comporte deux bornes d'entrée connectées respectivement à la borne de sortie du générateur 6 (Figures 1a et 1b) pour fournir le signal Cd de couple dynamique et à la borne de sortie du bloc "2" (Figure 6) pour fournir le signal Cs_brut. La borne de sortie de l'opérateur 55 produit à chaque instant la valeur de couple statique Cs qui est transmise en sortie du générateur 5.

Le générateur 6 des Figures 1a ou 1b produit un signal représentatif d'une composante dynamique Cd du couple à la roue demandé. Selon l'invention, la composante dynamique de couple demandé à la roue, ou couple dynamique en bref, définit le couple que le groupe motopropulseur doit rendre disponible au plus tôt au niveau des roues en fonction :

- du profil enregistré du conducteur, selon en particulier qu'il s'agit d'un conducteur humain ou d'un conducteur virtuel constitué par un automate de conduite ;
- du profil enregistré du véhicule tel qu'il a été enregistré dans le registre 1 des caractéristiques du véhicule ;

- de l'état de l'environnement du véhicule ainsi qu'il ressort de mesures faites sur l'état du véhicule dans son environnement.

Pour produire la composante de couple dynamique Cd, le dispositif de contrôle de l'invention comporte :

- une mémoire enregistrant le profil d'au moins un conducteur qui est connecté à un moyen pour détecter l'identité du conducteur présent aux commandes du véhicule et à un moyen pour mettre à jour le profil du conducteur en fonction des actions qu'il applique sur les organes de commande du véhicule ;
- une mémoire des paramètres du véhicule ou registre 1 déjà décrit ;
- de mémoires ou variables d'état représentant des signaux de sortie de capteurs convenables décrivant l'environnement du véhicule comme : la vitesse du véhicule, le couple résistant à la roue, l'accélération du véhicule, etc.

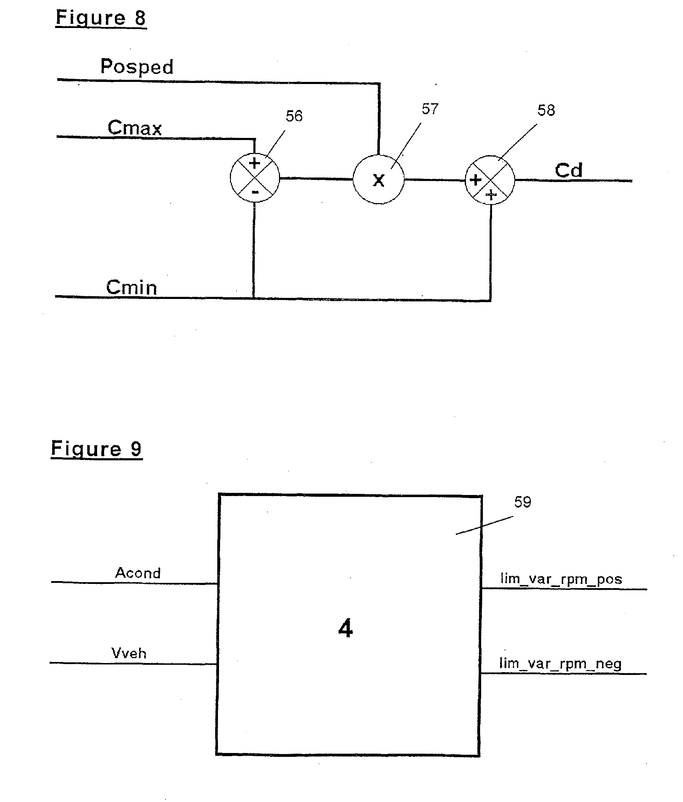

On va décrire ci-après, le mode de réalisation préféré du générateur 6 de composante dynamique du couple à la roue demandé. La figure 8 représente le premier niveau d'une telle réalisation. Le générateur 6 est alimenté avec les trois informations suivantes :

- Posped : l'information issue d'un capteur de la position de la pédale d'accélérateur et qui subit un prétraitement de normalisation (en %) connu de l'homme de métier ;
- Cmax : le couple maximum que le groupe motopropulseur gmp 11 peut fournir instantanément au régime à la roue actuel (en N.m) ;
- Cmin : le couple minimum que le groupe motopropulseur gmp 11 peut fournir instantanément au régime à la roue actuel (en N.m).

L'information de position de la pédale d'accélérateur peut être transformée selon le périphérique utilisé pour déterminer le régime du groupe motopropulseur ou selon l'information de consigne de régime du groupe motopropulseur déterminée par un éventuel automate de conduite. Les informations de couple Cmax et Cmin sont produites à l'aide de tables enregistrées qui sont adressées, dans un mode préféré de réalisation, en fonction de la vitesse de rotation à la roue Nroue.

A cette fin, le dispositif de contrôle de l'invention comporte une première mémoire pour enregistrer une fonction prédéterminée f, définie par la relation Cmax = f(Nroue) et une seconde mémoire pour enregistrer une fonction prédéterminée g, définie par la relation Cmin = g(Nroue). Il comporte ensuite un moyen pour adresser une valeur particulière de la première f et/ou de la seconde g mémoires de sorte qu'une valeur Cmax, respectivement Cmax soit lue dans la mémoire adressée et présentée à l'entrée convenable du générateur de couple dynamique 6.

La construction de la composante dynamique Cd du couple à la roue demandé exploite un moyen de calcul dont la fonction s'exprime sous la forme littérale suivante :

$$Cd = Cmin + Posped*[Cmax - Cmin]$$

A la figure 8, on a représenté un mode de réalisation particulier du générateur de couple dynamique 6 selon l'invention.

Le générateur de couple dynamique (référencé 6 aux Figures 1a et 1b) comporte trois bornes d'entrée connectées à des signaux qui ont déjà été décrits et trois opérateurs de traitement de ces signaux qui sont respectivement :

- un premier additionneur 56 dont une borne d'entrée positive reçoit à chaque instant la valeur représentative du couple maximum Cmax et dont une borne d'entrée reçoit à chaque instant la valeur représentative du couple minimum Cmin ;
- un multiplieur 57 dont une première borne d'entrée est connectée à la borne de sortie du premier additionneur 56 et dont une seconde borne d'entrée reçoit à chaque instant l'information de position de la pédale POSPE ;
- un second additionneur 58 dont une première borne d'entrée positive est connectée à la borne de sortie du multiplieur 57 et dont une seconde borne d'entrée positive reçoit à chaque instant la valeur représentative du couple minimum Cmin.

La borne de sortie du second additionneur 58 produit à chaque instant une valeur instantanée de couple dynamique Cd qui sert de signal de sortie au générateur 6.

Le premier module IVC 4 (Figures 1a ou 1b) comporte aussi un générateur 16 qui produit un signal représentatif d'une limitation des variations de régime moteur. En effet, on s'est aperçu que, lors de la recherche d'un point de fonctionnement optimum du groupe motopropulseur gmp 11, des variations de régime moteur, et particulièrement de la vitesse de rotation du moteur thermique du groupe motopropulseur gmp 11 pouvaient être commandées alors qu'aucune modification de la vitesse ou de l'accélération n'étaient commandées ou exécutées. C'est le cas notamment quand le dispositif de contrôle de l'invention demande aux machines électriques ME1 et/ou ME2 dans le mode de réalisation du groupe motopropulseur gmp 11 de la figure 3, de fournir plus de puissance et qu'il réduit alors la puissance délivrée par le moteur thermique MT. L'allure du véhicule peut alors ne pas varier mais le conducteur peut entendre une baisse de régime de moteur thermique et craindre une panne. Le générateur 16 de limitation des variations de régime moteur comporte donc des moyens pour produire un signal de limitation des variations de régime moteur, plus particulièrement mais pas uniquement, de la vitesse de rotation du moteur thermique de façon à limiter sous un seuil auditif, perceptible comme gênant, les dites limitations.

Dans un mode préféré de réalisation, le signal de limitation des variations de régime moteur est décomposé en deux composantes :

- une composante de signal de limitation des variations de régime moteur pour limiter les variations de régime moteur vers le sens de la réduction (lim_var_rpm_neg) ; et
- une composante de signal de limitation des variations de régime moteur pour limiter les variations de régime moteur vers le sens de l'augmentation (lim_var_rpm_pos). Selon l'invention, la limitation de variation de régime définit la variation maximale de régime moteur pendant un intervalle de temps déterminé.

Cette limitation dépend :

- du profil enregistré du conducteur, selon en particulier qu'il s'agit d'un conducteur humain ou d'un conducteur virtuel constitué par un automate de conduite ;
- du profil enregistré du véhicule tel qu'il a été enregistré dans le registre 1 des caractéristiques du véhicule ;
- de l'état de l'environnement du véhicule ainsi qu'il ressort de mesures faites sur l'état du véhicule dans son environnement.

Le signal de limitation des variations de régime moteur dépendant des mêmes paramètres que la composante de couple dynamique, le générateur 16 est connecté par des bornes d'entrée convenables aux mêmes moyens que le générateur 6 et particulièrement à :

- la mémoire enregistrant le profil d'au moins un conducteur ;
- la mémoire des paramètres du véhicule ou registre 1 déjà décrit ;
- les mémoires ou variables d'état représentant des signaux de sortie de capteurs convenables décrivant l'environnement du véhicule comme : la vitesse du véhicule, le couple résistant à la roue, l'accélération du véhicule, etc.

On va décrire ci-après, le mode de réalisation préféré du générateur 16 de signal représentatif d'une limitation des variations de régime moteur. La figure 9 représente le premier niveau d'une telle réalisation. Le générateur 16 comporte essentiellement un bloc « 4 », qui porte au dessin le numéro de référence 59 et qui est alimenté avec les deux informations suivantes :

- Acond : qui représente le degré d'activité estimé ou mesuré du conducteur (en %) et qui est lue dans la mémoire enregistrant le profil d'au moins un conducteur ;.
- Vveh : La vitesse du véhicule (en km/h) et qui est lue ou interprétée sur les mémoires ou variables d'état représentant des signaux décrivant l'environnement du véhicule.

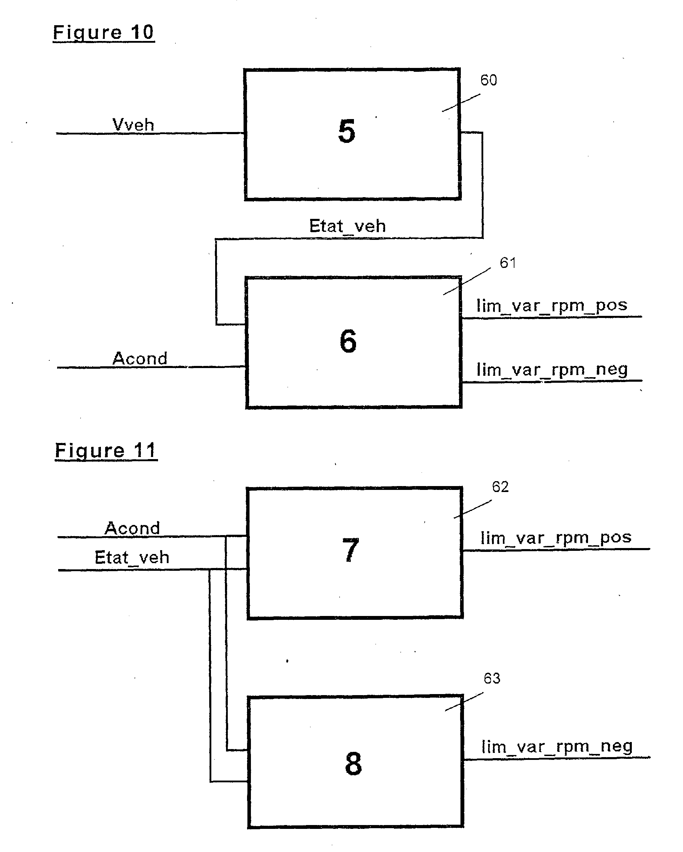

Suivant le mode de réalisation de la figure 10, on peut décomposer le processus de calcul en deux blocs, dénommés bloc « 5 » (référence 60) et bloc « 6 » (référence 61).

Le bloc « 5 » permet de construire une information Etat_veh qui définit l'état d'accélération du véhicule à partir de l'information Vveh. Le bloc "5" 60 comporte une mémoire (non représentée) d'une valeur précédente de la vitesse du véhicule Vveh(t - Tv) qui correspond à une date (t - Tv) précédant d'une période Tv, prédéterminée et enregistrée dans un registre (non représenté) ou calculée par un opérateur spécifique (non représenté), l'instant présent t d'acquisition de la nouvelle valeur de la vitesse du véhicule Vveh(t).

Le bloc "5" 60 comporte ensuite un opérateur (non représenté) de calcul de l'accélération instantanée a(t) du véhicule à la date t qui exécute la relation :

$$a(t) = [Vveh(t) - Vveh(t - Tv)] / Tv$$

dont le signal de sortie représente la valeur a(t) de l'accélération instantanée du véhicule à la date présente t.

Le bloc "5" 60 comporte aussi une mémoire (non représentée) enregistrant une succession de valeurs de seuils d'accélération ; Seuil_acc et Seuil_dec, mémoire qui est adressée par un module d'adressage (non représenté) dont le paramètre de commande est préférentiellement lié au choix qui a été fait du type de caractère du véhicule enregistré dans le registre 1 de type du véhicule de sorte que les valeurs de seuil, Seuil_acc et Seuil_dec, rendent compte du type de véhicule désiré, les valeurs de seuil étant lues alors dans la mémoire.

Dans le mode préféré de réalisation, l'information Etat_veh prend une valeur prise parmi trois états :

- Valeur « 0 » pour décrire un comportement de vitesse stabilisée ;
- Valeur « 1 » pour décrire un comportement en accélération ; et
- Valeur « -1 » pour décrire un comportement en décélération.

A cette fin, le module "5" 60 comporte aussi un module de test (non représenté) qui exécute à l'aide des paramètres décrits ci-dessus les tests suivants :

Si (a(t) > Seuil_acc) Alors Etat_Vehic = 1;
Si (a(t) < Seuil_dec) Alors Etat_Vehic = -1;
Si ((a(t) <= Seuil_acc) Et (a(t) >= Seuil_dec)) Alors Etat_Vehic = 0;

Dans un autre mode de réalisation, le paramètre Etat_veh est produit par un module spécifique directement à partir d'une information contenant l'accélération du véhicule issue d'un capteur adapté ou d'un estimateur travaillant d'une manière connue de l'homme de métier.

Le bloc « 6 » 61 qui produit les deux signaux de limitation, est lui-même décomposé à la figure 11. A partir d'une information contenant l'activité du conducteur Acond et qui a été définit plus haut, et de la variable d'état Etat_veh produite par le bloc "5" 61, les deux signaux de limitation sont construits de manière indépendante par deux blocs : bloc « 7 » 62 et bloc « 8 » 63. Les deux signaux de limitation sont des consignes de gradient de régime moteur, lim_var_rpm_pos et lim_var_rpm_neg définies par les relations :

$$\text{lim\_var\_rpm\_pos} = f1 \, (Acond, Etat\_veh)$$

$$\text{lim\_var\_rpm\_neg} = f2 \, (Acond, Etat\_veh)$$

Les fonctions « f1 » et « f2 » peuvent être réalisées aussi bien par des expressions algébriques que par des tables d'interpolation dont les paramètres sont déterminés de manière définitive lors de la mise au point du véhicule. La fonction « f1 » est produite par le module 62 tandis que la fonction « f2 » est produite par le module 63.

L'un ou l'autre des modules 62 ou 63 est exécuté dans le mode de réalisation de genre algébrique à l'aide d'un module d'entrée des deux arguments Acond et Etat_véhic, d'une mémoire maintenant la fonction algébrique considérée « f1 » ou « f2 », par exemple implémentée en langage C et exécutée sur un microprocesseur, et d'un module de sortie pour rendre disponible aux autres ressources du dispositif de contrôle de l'invention la valeur résultat du traitement algébrique « f1 » ou « f2 ».

L'un ou l'autre des modules 62 ou 63 est exécuté dans le mode de réalisation de genre tabulé à l'aide d'un module d'entrée des arguments Acond et Etat_véhic, d'un moyen pour maintenir les tables de valeurs f1(x,y) pour le traitement « f1 » ou f2(x,y) pour le traitement « f2 » et d'un moyen d'adressage de la table concernée en fonction des paramètres d'entrée et pour produire en sortie du module 62 ou 63 une valeur tabulée lue dans le moyen pour maintenir les tables f1 ou f2.

Dans l'un ou l'autre des deux modes, chaque fonction f1 et f2 est établie de sorte que la variation perçue par le conducteur est qualifiée de "non gênante". Dans cette situation, les fonctions f1 et f2 sont prédéterminées par essais sur des populations "moyennes" de conducteurs. Il est possible que le dispositif de contrôle de l'invention puisse contenir des pluralités de fonctions f1 et f2 adaptées chacune à des conducteurs différents et le dispositif de contrôle de l'invention exécutant une sélection d'une fonction f1 et d'une fonction f2 selon la personnalité du conducteur détecté aux commandes du véhicule.

Le premier module IVC 4 interpréteur de la volonté du conducteur produit ainsi trois signaux Cs, Cd, lim_var_rpm, qui sont transmis comme signaux de commande principaux du second module OPF 7 d'optimisation du fonctionnement du groupe motopropulseur 11. De cette façon, le dispositif de l'invention assure une parfaite adaptation des modules qui le constituent permettant de les paramétrer de façon indépendante, ainsi que de programmer de façon indépendante les différents composants de commande du véhicule. Selon l'invention, on s'est aperçu que les deux composantes statique Cs et dynamique Cd du couple à la roue ainsi que la limitation de variation du régime moteur suffisent à réaliser un choix parfait du point de fonctionnement du moteur 10 par le second module OPF 7.

Quand le groupe motopropulseur est constitué par un moteur à essence ou par un moteur diesel, le second module OPF 7 détermine un point de fonctionnement du moteur en termes de régime N et de couple de sortie sur les roues.

Ainsi qu'il est représenté aux figures 1 a et 1 b, le second module OPF 7 est connecté à deux modules qui lui fournissent ses arguments d'entrée qui sont respectivement :

- le module 3 de prise en compte de l'environnement du véhicule qui transmet au second module OPF 7 notamment :

  - le régime du moteur thermique mesuré lors du cycle de calcul précédent, N_old ;
  - la vitesse du véhicule Vveh ; et
  - dans le mode de réalisation de la figure 1b, l'état de charge de l'élément de stockage d'énergie électrique, notée SOC par exemple mesuré par un coefficient entier de 0 à 100% ;

- le premier module IVC 4 qui produit les deux consignes CS et Cd de couple statique et de couple dynamique ainsi que pour le mode de réalisation de la figure 1b, les paramètres de limitation des variations de régime moteur.

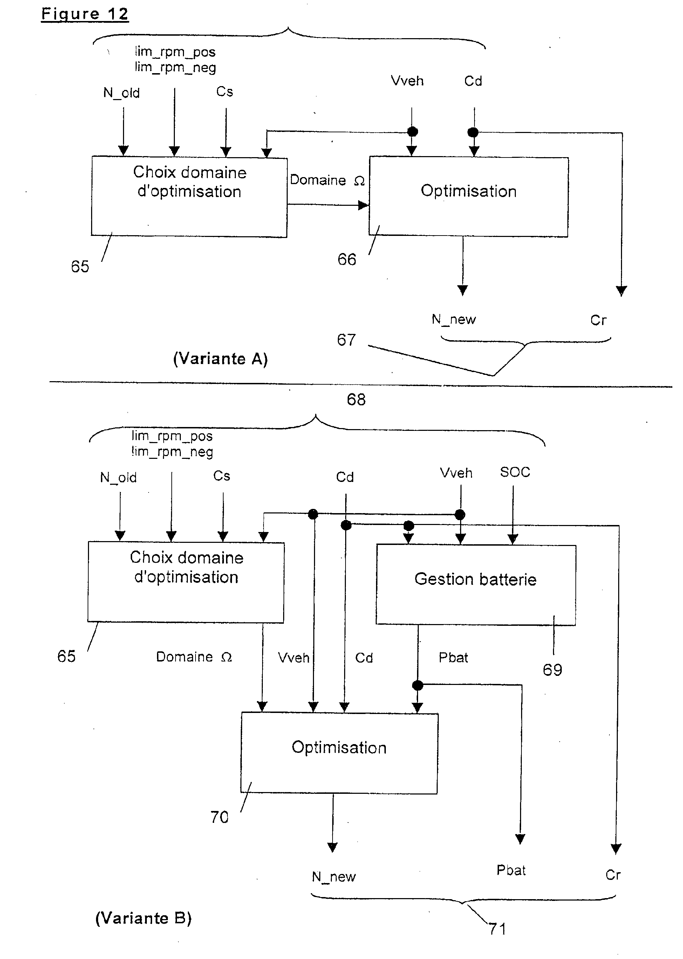

Un mode particulier de réalisation du second module OPF 7 du dispositif de contrôle selon l'invention est illustré à la figure 12 selon une variante A et une variante B.

Dans la variante A, le module OPF est composé de deux blocs :

- Le module 65 qui exécute une fonction de "Choix du domaine d'optimisation" qui définit l'intervalle de régimes moteur sur lequel l'optimisation sera effectuée ;
- Le module 66 d'optimisation proprement dit.

Cette variante A correspond au mode de réalisation illustré à la figure 1a. Le second module OPF de la variante A produit en sortie les coordonnées d'un point de fonctionnement appartenant au domaine de fonctionnement optimal, les deux coordonnées étant :

- Le couple à la roue Cr ;
- Le régime moteur N_new.

La coordonnée Cr est identique au couple dynamique Cd puisque la borne de sortie Cr est connectée directement à la borne d'entrée qui reçoit la valeur de couple dynamique Cd. La sortie N_new est la sortie du module d'optimisation 66.

Dans une autre variante B, on considère le cas où un élément de stockage d'énergie électrique figure dans le groupe motopropulseur gmp, comme dans le mode de réalisation de la figure 3. Cet élément de stockage est appelé dans la suite batterie. La variante B correspond à un dispositif de contrôle de l'invention selon la figure 1b. Dans cette variante plus évoluée, le second module OPF 7 est composé de trois blocs :

• Le bloc 65 qui exécute une fonction de "Choix du domaine d'optimisation" qui définit l'intervalle de régimes moteur sur lequel l'optimisation sera effectuée, déjà décrit à la variante A;
• Un module 69 de gestion du stock d'énergie électrique ;
• Le module 70 d'optimisation proprement dite.

L'explication détaillée du module OPF est basée sur la variante B qui inclue la variante A pour qui la puissance livrée de la batterie Pbat est nulle.

Une modélisation mécanique détaillée du système composé du groupe motopropulseur gmp avec la transmission et l'ensemble du véhicule permet de disposer de la fonction qui détermine les valeurs de couple à la roue Cr, soit :

$$Cr = Cr(N, Cmt, Vveh, Pbat)$$

qui incorpore toutes les limitations des organes du groupe motopropulseur gmp. Ici Cr représente le couple aux roues, N le régime du moteur thermique, Vveh la vitesse du véhicule et Pbat la puissance fournie par la batterie.

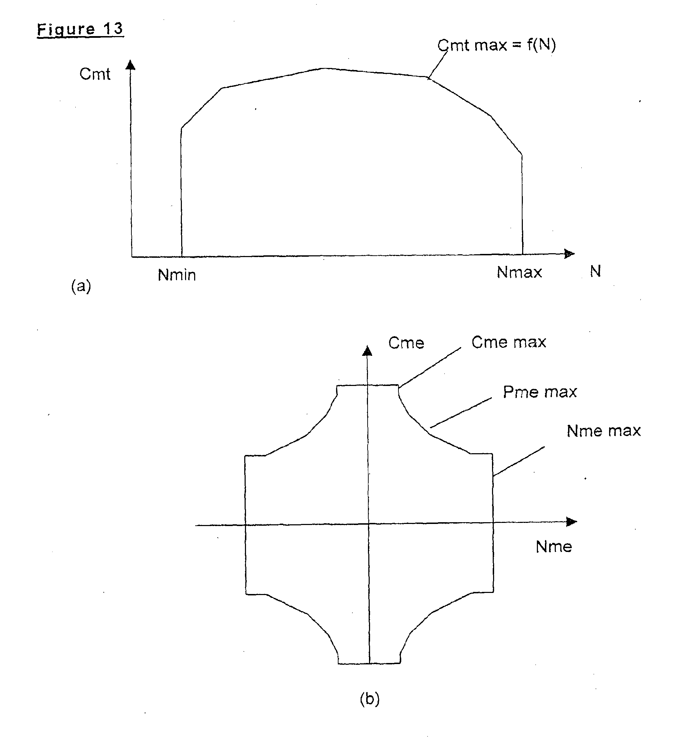

La figure 13 montre deux représentations graphiques de la fonction de couple à la roue Cr à titre d'exemple de limitations du groupe motopropulseur gmp. A la figure 13, le diagramme (a) montre l'enveloppe du couple moteur thermique Cmt en fonction du régime moteur N. Les limitations naturelles du moteur thermique imposent un régime de ralenti Nmin et une vitesse de rotation ou régime maximal Nmax. Le couple à la roue est par ailleurs limité par la puissance mécanique maximale déterminée pour le système mécanique constitué par le véhicule. Il en résulte que le domaine de fonctionnement du moteur thermique est défini dans un espace à deux dimensions : N pour le régime moteur et Cmt pour le couple délivré par le moteur thermique, le point de fonctionnement étant défini par les coordonnées (Nmt, Cmt).

Le domaine de fonctionnement du moteur thermique est donc défini dans le mode de réalisation de l'invention par les relations suivantes :

$$|Nmin| < Nm < Nmax \qquad (1)$$

$$|Cmt| < Cmt\_max \qquad (2)$$

$$|Cmt\_max| = Cmt\_max(Nmt) \qquad (3)$$

dans lesquelles |.| désigne l'opérateur « valeur absolue ». Nmin et Nmax sont des valeurs numériques de limitations minimale, respectivement maximale de régime moteur imposé.

A la figure 13, le diagramme (b) montre l'enveloppe du couple d'une des machines électriques ME1 ou ME2 en fonction du régime du moteur électrique. Le diagramme est ici symétrique pour les quatre quadrants, mais la disposition dépend du type de machine électrique. En étudiant le fonctionnement de la machine électrique ME1 ou ME2, il vient que la vitesse de rotation du moteur électrique doit être inférieure à une vitesse prédéterminée Nme_max qui est fixée par des considérations électromagnétiques et mécaniques (paliers). De même la puissance électrique absorbable par la machine est limitée à une puissance maximale déterminée par les dimensionnements de la machine et le choix de ses matériaux. Il en résulte que la puissance mécanique, obtenue avec le rendement électromécanique, délivrée par le moteur électrique doit être inférieure à une valeur Pme_max. Enfin, le couple mécanique Cme ne peut en général dépasser le couple de blocage du rotor. Il en résulte que le domaine de fonctionnement du moteur électrique est dans le mode de réalisation de l'invention par les relations suivantes :

$$Nme < Nme\_max \qquad (4)$$

$$Cme < Cme\_max \qquad (5)$$

$$Cme \times Nme < Pme\_max \qquad (6)$$

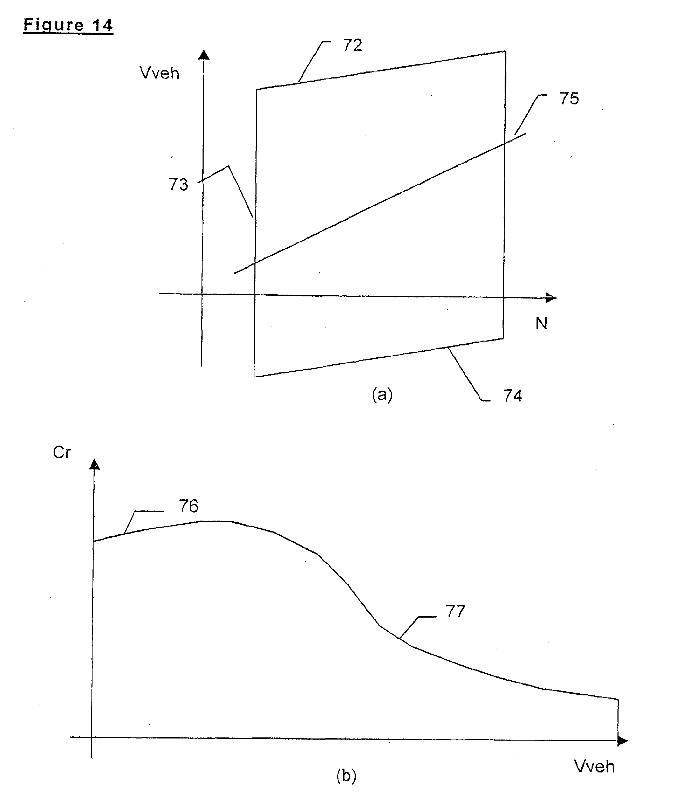

La figure 14 illustre pour cet exemple comment ces limitations bornent la fonction Cr = Cr1(N, Cmt, Vveh, Pbat). La figure donne deux projections de la fonction. La figure 14a est une projection sur le plan {Vveh ; N} et la figure 14b est une projection sur le plan {Cr ; Vveh}. Dans l'exemple la borne 73 est due au régime minimal Nmin du moteur thermique et les bornes 72 et 74 sont dues aux limitations de régime des machines électriques. La borne 76 (diagramme (b)) est due aux limitations en couple des machines électriques ME1 et ME2 et la borne 77 (diagramme (b)) est due à la limitation en puissance du moteur thermique. La forme de projection change dans le cas où la transmission comporte un variateur mécanique ou une boîte de vitesse étagée, mais le principe de description des contraintes physiques reste inchangé. La courbe Cr = Cr(Vveh) est donc déterminée à la construction du véhicule et enregistrée dans une mémoire convenable du second module OPF 7. Cette mémoire est connectée, dans un mode de réalisation, à un dispositif de mise à jour lors d'opérations de maintenance du véhicule ou à un dispositif d'adaptation lors de phases d'initialisation de la marche du véhicule.

La recherche de la valeur maximale de Cr sur toutes les valeurs de couple délivrées par le moteur thermique Cmt définit une autre fonction Cr2() définie par la relation :

$$Cr2 = Cr2(N, Vveh, Pbat).$$

Pour le cas Pbat = constante, ladite constante valant 0 pour la variante A de la figure 12, cette fonction est enregistrée dans une mémoire convenable du second module OPF 7 sous la forme Cr2 = Cr2(N, Vveh). Cr2() est une fonction qui dépend de deux arguments d'entrée pour un régime du moteur fixé et pour une vitesse du véhicule donnée et qui produit le couple aux roues maximal réalisable. La mémoire de la fonction prédéterminée Cr() est couplée à un module d'inversion qui comporte deux opérateurs MAX, de recherche du maximum et MIN de recherche du minimum. L'inversion de cette fonction Cr2() produit des troisième et quatrième fonctions notées :

$$Nmin = Nmin(Cr2, Veh) = MIN\{N(Cr2, Veh)\} \qquad (7)$$

$$Nmax = Nmax(Cr2, Veh) = MAX\{N(Cr2, Veh)\}. \qquad (8)$$

Nmin est, pour une vitesse du véhicule donnée, le régime du moteur minimal pour lequel le couple Cr2 peut être réalisé. Nmax est, pour une vitesse du véhicule donnée, le régime du moteur maximal pour lequel le couple Cr2 peut être réalisé.

A la figure 12, on a représenté une Variante A qui correspond au cas d'un groupe motopropulseur sans moteur électrique, et une Variante B qui correspond au cas du groupe motopropulseur gmp 11 de la figure 3.

La Variante A comporte deux modules respectivement :

- un module 65 de Choix du domaine d'optimisation qui reçoit d'une zone d'entrée 64 les paramètres d'entrée N_old, de régime moteur mesuré lors du cycle de calcul précédent, lim_rpm_pos et lim_rpm_neg de réduction des variations de régime positive et négative reçues du générateur 16, Cs de couple statique reçue du générateur 5 de couple statique ;
- un module 66 de calcul d'un point de fonctionnement du groupe motopropulseur gmp 11 qui reçoit en entrée les paramètres de Vveh de vitesse du véhicule et Cd de couple dynamique présents dans la zone d'entrée 64 et provenant respectivement du module de détection de l'environnement du véhicule 3 et du générateur 6 de couple dynamique.

Le module 66 d'optimisation reçoit aussi une définition convenable du domaine d'optimisation $\Omega$ produite par le module 65 et sa sortie produit la nouvelle valeur de régime moteur calculée N_new à la fin du cycle de fonctionnement du dispositif de l'invention. Le second module OPF 7 d'optimisation du point de fonctionnement comporte enfin une zone de sortie 67 dans laquelle sont rendues disponibles les paramètres N_new et Cr, la valeur Cr de couple à la roue étant directement recopiée de la sortie du générateur de couple dynamique présente dans la zone d'entrée 64.

La Variante B comporte trois modules respectivement :

- un module 65 de Choix du domaine d'optimisation qui reçoit d'une zone d'entrée 64 les paramètres d'entrée N_old, de régime moteur mesuré lors du cycle de calcul précédent, lim_rpm_pos et lim_rpm_neg de réduction des variations de régime positive et négative reçues du générateur 16, Cs de couple statique reçue du générateur 5 de couple statique ;
- un module 69 de gestion de la batterie qui reçoit de la zone d'entrée 68 les paramètres Cd de couple dynamique, Vveh de vitesse de véhicule et SOC d'état de charge et qui produit une consigne de puissance batterie Pbat ; et
- un module 70 de calcul d'un point de fonctionnement du groupe motopropulseur gmp 11, très semblable au générateur 66 décrit pour la Variante A, mais qui reçoit aussi en entrée le paramètre Pbat de consigne de puissance batterie provenant de la sortie du module 69 de gestion batterie.

Le module 66 d'optimisation reçoit aussi une définition convenable du domaine d'optimisation $\Omega$ produite par le module 65 et sa sortie produit la nouvelle valeur de régime moteur calculée N_new à la fin du cycle de fonctionnement du dispositif de l'invention. Le second module OPF 7 d'optimisation du point de fonctionnement comporte enfin une zone de sortie 71 dans laquelle sont rendues disponibles les paramètres N_new, Pbat et Cr, la valeur Cr de couple à la roue étant directement recopiée de la sortie du générateur de couple dynamique présente dans la zone d'entrée 68.

Le module 65 de Choix du domaine d'optimisation de la figure 12, pour les deux variantes A et B, est un processeur qui exécute à chaque instant des calculs des trois fonctions Cr2(N, Vveh), Nmin(Cr2, Veh) et Nmax(Cr2, Veh) selon un algorithme de choix de domaine d'optimisation qui va être décrit ci-après.

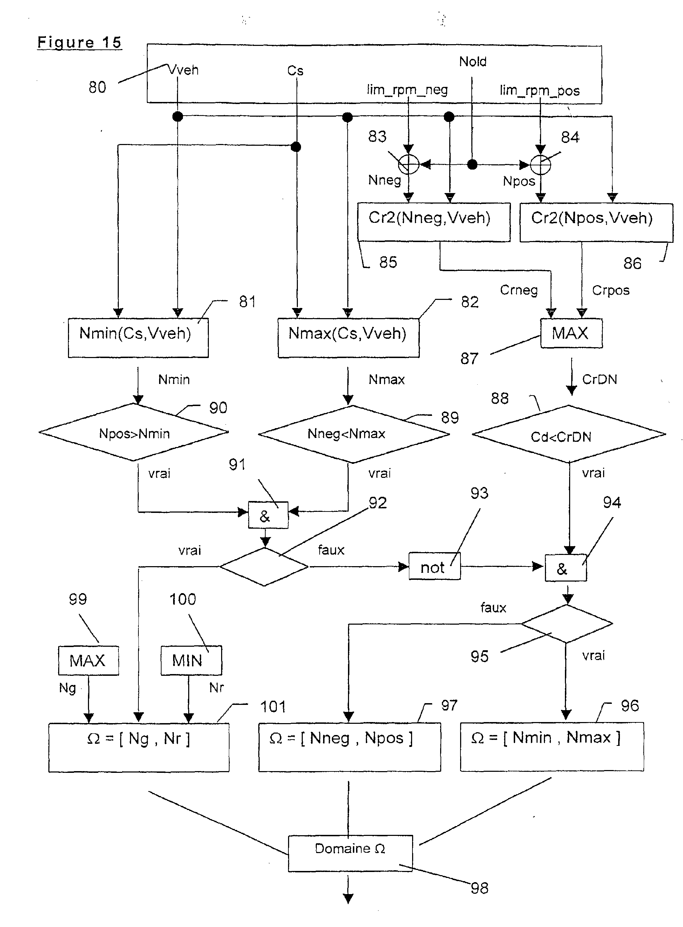

La figure 15 explique un mode de réalisation préféré d'un algorithme de choix de domaine d'optimisation, exécuté dans le module 65 de choix de domaine d'optimisation. La sortie du module 65 (figure 12) produit les bornes haute et basse d'un intervalle de variation optimale de régime moteur qui permet d'atteindre un fonctionnement optimal en fonction de contraintes prédéterminées, comme la réduction de l'émission de polluants et de réduction de la consommation.

Les deux routines 81 et 82 reçoivent en arguments les valeurs Vveh et Cs de vitesse du véhicule et de couple statique de la routine d'initialisation 80 et produisent en sorties deux limitations Nmin() et Nmax() de l'intervalle de régime moteur imposé par Cs. La routine 81 ou la routine 82 peut être implémentée sous la forme d'une mémoire à deux arguments d'adresse qui reproduit une cartographie des valeurs Nmin() ou Nmax() selon le cas pour un groupe motopropulseur gmp 11 donné. Ces valeurs sont enregistrées au moins lors de la fabrication du véhicule et eLes peuvent être remises à jour lors de la la maintenance ou lors d'étapes de calibration lancé par le dispositif de contrôle 10. L'intervalle de régime [Nmin, Nmax] déterminé par les deux sorties de calcul des routines 81 et 82 sera désigné dans la suite par l'expression "intervalle de couple statique".

La routine 85 a comme arguments d'entrée une première valeur numérique de régime Nneg et la valeur de la vitesse du véhicule Vveh, fournies par la routine d'initialisation de boucle 80. La valeur numérique Nneg est calculée par l'opération 83 définie par la relation :

$$Nneg = (N\_old - lim\_rpm\_neg) \qquad (9)$$

recevant en arguments d'entrée les valeurs N_old, représentative du régime du moteur thermique mesuré lors du cycle de calcul précédent et disponible en sortie du troisième module 10 COS et lim_rpm_neg, représentative du gradient autorisé de variations du régime moteur par le générateur 16 du premier module IVC 4.

En utilisant la cartographie Cr2(N, Vveh), précédemment décrite et réalisée comme il a été décrit plus haut pour les fonctions Nmin() ou Nmax(), il est généré à chaque boucle de l'algorithme de la figure 15 une première valeur d'autorisation Crneg qui correspond au couple maximal aux roues pour la diminution maximale de régime autorisée.

La routine 86 a comme a comme arguments d'entrée une seconde valeur numérique de régime Npos et la valeur de la vitesse du véhicule Vveh, fournies par la routine d'initialisation de boucle 80. La valeur numérique Npos est calculée par l'opération 84 définie par la relation :

$$Npos = (N\_old + lim\_rpm\_pos) \qquad (10)$$

recevant en arguments d'entrée les valeurs N_old, représentative du régime du moteur thermique mesuré lors du cycle de calcul précédent et disponible en sortie du troisième module 10 COS et lim_rpm_pos, représentative du gradient autorisé de variations du régime moteur par le générateur 16 du premier module IVC 4.

En utilisant la cartographie Cr2(N, Vveh) précédemment décrite et réalisée comme il a été décrit plus haut pour les fonctions de limitation minimale et maximale de l'intervalle de régime du moteur imposé Nmin() ou Nmax(), il est généré à chaque boucle de l'algorithme de la figure 15 une seconde valeur d'autorisation Crpos qui correspond au couple maximal aux roues pour l'augmentation maximale de régime autorisée.

Une fonction de recherche du maximum de deux arguments MAX() est exécutée à la routine 87 qui reçoit en arguments d'entrée Crneg produit par la routine 85 et Crpos produite par la routine 86, et elle fournit une valeur CrDN, la plus grande valeur entre les première et secondes valeurs d'autorisation Crneg et Crpos, présentées aux entrées de la fonction MAX(). Cette valeur correspond au couple maximal aux roues respectant l'intervalle [Nneg, Npos] qui sera désigné dans la suite par l'expression "intervalle d'agrément".

A ce niveau de l'algorithme, on remarque que les trois paramètres Nmin, Nmax et CrDN peuvent être calculés en parallèle par trois processeurs distincts.

Trois test 88 à 90 sont exécutés en parallèle aussi, qui sont respectivement :

- un test 88 sur le paramètre CrDN : Cd < CrDN ;
- un test 89 sur le paramètre Nmax : Nneg < Nmax ;
- un test 90 sur le paramètre Nmin : Npos > Nmin.

Une opération de combinaison logique ET est exécutée dans la routine 91 entre les sorties à "VRAI" des test 89 et 90, de sorte que, si les deux conditions :

$$Npos > Nmin \qquad (11)$$

$$Nneg < Nmax \qquad (12)$$

sont simultanément vérifiées, l'intervalle du couple statique et l'intervalle d'agrément ont une intersection non vide. La routine 101 détermine cette intersection, définie par :

$$\Omega = [\ Ng\ ,\ Nr\ ] \qquad (13)$$

où :

$$Ng = MAX\ \{Nmin,\ Nneg\} \qquad (14)$$

$$Nr= MIN\ \{Nmax,\ Npos\}. \qquad (15)$$

A cet effet, la valeur de sortie de l'opération ET 91 est testée pour déterminer si elle VRAI par un test 92 à la valeur VRAI. La sortie du test 92 est active si les conditions (11) et (12) des tests 89 et 90 sont vraies simultanément ; et la sortie VRAI du test 92 active le module 101. Le module 101 admet deux paramètres en entrée : Ng et Nr calculés selon les relations (14) et (15).

Les valeurs Nmin, Nmax produites en sortie des routines 81 et 82, Nneg et Npos, produites par les opérations 83 et 84 sont respectivement fournies aux entrées convenables des routines MAX 99 et MIN 100 selon les relations (14) et (15) précitées. Leurs valeurs de sortie sont transmises au module 101 qui mémorise le couple de valeurs (Ng, Nr), dans le cas présent représentatif du domaine d'optimisation recherché et chargé comme tel dans le registre 98 de définition du domaine d'optimisation.

Si la condition du test 90 est fausse, mais si CrDN > Cd, c'est à dire que la condition du test 88 est vrai, alors le bloc 97 donne le domaine :

$$\Omega = [Nneg,\ Npos]$$

A cet effet, la sortie FAUX du test 92 est constituée par un inverseur NOT 93 dont la sortie est combinée dans un opérateur ET 94 avec la sortie VRAI du test 88, la sortie de l'opérateur 94 est testée à VRAI par un test 95 dont la sortie VRAI active le module 96 et dont la sortie FAUX active le module 97.

Dans le cas où la sortie de l'opérateur 94 est FAUX, le module 97 est activé et transmet les valeurs Nneg et Npos comme définition du domaine $\Omega$ au registre 98. On vérifie seulement l'intervalle d'agrément et on néglige la consigne de couple dynamique. En effet, on exploite la marge de couple existante.

Dans le cas où la sortie de l'opérateur 94 est VRAI, le module 96 est activé et transmet les valeurs Nmin et Nmax comme définition du domaine $\Omega$ au registre 98, la routine 96 détermine l'intersection non vide, définie par :

$$\Omega = [Nmin\ ,\ Nmax];$$

Dans ce cas, on vérifie seulement l'intervalle de couple statique et on néglige la consigne d'agrément. En effet, la marge de couple existante n'est pas suffisante. Il faut autoriser un changement de régime important pour satisfaire la consigne du couple dynamique.

Pour la réalisation du module de gestion de batterie 69 dans la variante B de la Figure 12, il est mis en oeuvre le procédé de la demande de Brevet Français N° 00 17356, déposée le 28 décembre 2000 au nom du même déposant. La variante de base de ce procédé permet de construire un générateur de la consigne de la puissance à fournir par la batterie Pbat en fonction de la vitesse du véhicule Vveh, la consigne de couple dynamique Cr = Cd et l'état de charge de la batterie. Le générateur de consigne de puissance est préférentiellement réalisé sous la forme d'une cartographie Pbat(Vveh, Cr, SOC), où SOC est une grandeur représentative de l'état de l charge de la batterie qui peut être réalisée sur la base d'un estimateur logiciel. Il détermine la puissance de batterie à prendre en compte dans le module d'optimisation. Un tel générateur de consigne de puissance est décrit dans la demande de brevet français n° 00/00285.

Pour la réalisation du module 66 d'Optimisation du point de fonctionnement, deux étapes de calcul sont exécutées. L'inversion de la fonction ou cartographie Cr = Cr(N, Cmt, Vveh, Pbat) donne la fonction {Cmt, N} = f(Cpt, Vveh, Pbat). En effet, cette nouvelle fonction donne l'iso puissance dans le plan {Cmt ; N} pour le triplet de coordonnées (Cr, Vveh, Pbat).

La première étape est exécutée par un module d'inversion de la fonction Cr() pour la production de la fonction d'isopuissance sur l'intervalle ou domaine d'optimisation $\Omega$. A cette fin, le module d'inversion du module 66 d'Optimisation du point de fonctionnement exécute une fonction qui détermine à chaque instant les coordonnées du point de fonctionnement (N, Cmt) sur la base de la relation :

$$\{N,\ Cmt\}\ =\ \{(N,\ Cmt)\ |\ Cd\ =\ Cr(N,\ Cmt,\ Vveh,\ Pbat),\ N \in \Omega,$$
$$Cmt\_min(N) \leq Cmt \leq Cmt\_max(N)\}.$$

Dans un mode de réalisation préféré, l'iso-puissance est représentée par une suite de NJ points $\{(N, Cmt)_j\ ;$ $j=1...NJ\}$ dans une cartographie réalisée sous forme d'une mémoire enregistrée avec des moyens d'adressage à un argument j d'entrée et deux paramètres de sortie N et Cmt qui sont les coordonnées du point de fonctionnement en cours d'optimisation.

La deuxième étape de calcul est exécutée au moyen d'un module de calcul du débit d'essence qui associe à chaque point de fonctionnement $(N, Cmt)_j$ un débit de carburant $Q_j$. Le point avec le débit minimal définit le nouveau point de fonctionnement *N_new*. A cette fin, le module d'optimisation du point de fonctionnement exploite le point de fonctionnement fournit lors de la seconde étape précitée et l'utilise pour rechercher dans une cartographie réalisée sous la forme d'une mémoire, dotée de moyens d'adressage à deux arguments N et Cmt, dans laquelle est enregistrée les valeurs de débit d'essence minimaux pour atteindre, de manière optimale relativement aux contraintes précitées de réduction d'émission des polluants et de réduction de la consommation, un point de fonctionnement (N, Cmt). Si la puissance de la batterie est non nulle, particulièrement si le groupe motopropulseur gmp 11 comporte une machine électrique, la valeur délivrée Pbat comme consigne nouvelle est produite en sortie du module 70 (Variante B de la figure 12). Dans les deux variantes A et B de la figure 12, les modules d'optimisation 66 et 70 délivrent de nouvelles valeurs 67 et 71 désignées par N_new, pour la vitesse de rotation à la roue et par Cr pour le couple à la roue. Les valeurs précédentes passent dans des registres N_old et Cr dans la routine d'initialisation de boucle 80 de l'algorithme de la figure 15.

On a ainsi décrit un mode de réalisation du troisième module COS 10 de traduction du point de fonctionnement optimal en données de commande d'un groupe motopropulseur gmp 11 déterminé, selon le mode de réalisation de la figure 3 et utilisant l'enseignement d'une demande de brevet français n° 00/06003 déposée au nom du présent demandeur et qui est incorporée par référence dans la présente demande.

Chacun des dispositifs susceptibles de faire varier l'environnement du véhicule ou capable de le détecter, dispositifs comprenant le groupe motopropulseur 11 et les roues motrices 12 (figures 1a et 1b), coopèrent avec un dispositif de détection de son état de fonctionnement. Dans le mode de réalisation représenté au dessin, il s'agit principalement d'un détecteur 13 du régime moteur et éventuellement du couple moteur, d'un détecteur 14 de l'état de la chaîne de transmission qui détecte le rapport de transmission, et éventuellement le couple à la sortie du dispositif de transmission et la vitesse de rotation de l'arbre de sortie du dispositif de transmission, et d'un détecteur 15 de l'état cinématique des roues notamment de leur vitesse de rotation.

Dans un mode particulier de réalisation, le dispositif de l'invention comporte un moyen d'initialisation qui est activé lors de la procédure de démarrage du groupe motopropulseur. Dans un tel mode de réalisation, l'initialisation du dispositif de contrôle du point de fonctionnement du groupe motopropulseur de l'invention exécute :

- le chargement des registres internes qui contiennent les diverses variables descriptives des caractéristiques du véhicule 1, et du conducteur 2, ainsi que des caractéristiques de l'environnement 3 ;
- le chargement de tables de traduction produisant respectivement les valeurs du couple statique Cs, du couple dynamique Cd et de la limitation de variation de régime moteur Lim_var_rpm.
- l'initialisation du second module OPF optimiseur de point de fonctionnement.

On note que le conducteur peut être temporairement ou en permanence substitué par un automate de conduite.

Selon l'invention, on note aussi que la nature du groupe motopropulseur n'est pas limitative. L'invention s'applique donc aussi bien à une motorisation thermique, à essence, gas-oil ou gaz, qu'à une motorisation électrique, à courant continu ou à courant alternatif, et qu'à une motorisation hybride. Il n'est besoin que de changer le second module OPF 7 optimiseur de Point de Fonctionnement. De cette façon, l'un des objets de modularité de l'invention est facilement atteint.

**Revendications**

1. Dispositif de contrôle du point de fonctionnement du groupe motopropulseur d'un véhicule, **caractérisé en ce qu'**il comporte essentiellement :

   - un premier moyen ou module IVC (4) pour, en fonction d'une interprétation de la volonté du conducteur et de l'état de l'environnement du véhicule, générer un signal représentatif d'une consigne de couple à la roue immédiatement délivrable par le groupe motopropulseur.
   - un second moyen ou module OPF (7) pour produire les coordonnées d'un point de fonctionnement du groupe motopropulseur choisi en fonction du signal représentatif d'une consigne de couple à la roue immédiatement délivrable par le groupe motopropulseur produit par le module IVC (4) d'une part et en fonction d'un signal représentatif de l'état de l'environnement du véhicule produit par un module de prise en compte de l'environnement du véhicule (3), d'autre part, le point de fonctionnement étant déterminé dans un domaine de fonctionnement optimal du groupe motopropulseur (11) calculé sur la base de contraintes prédéterminées comprenant la consommation de carburant, des contraintes d'agrément de conduite et des contraintes physiques préenregistrées comme les limitations des différents organes du groupe motopropulseur et de l'émission de polluants ; et
   - un troisième moyen ou module COS (10) pour traduire les coordonnées de ce point de fonctionnement en signaux de commande adaptés au groupe motopropulseur.

2. Dispositif selon la revendication 1, **caractérisé en ce que** le signal représentatif d'une consigne de couple à la roue immédiatement délivrable par le groupe motopropulseur est produit par un générateur de consigne de couple à la roue qui comporte

   - un générateur (5) d'une première composante du signal représentatif d'une consigne de couple à la roue immédiatement délivrable, dite couple statique correspondant au couple maximal disponible au groupe motopropulseur dont le conducteur voudrait disposer instantanément,
   - un générateur (6) d'une seconde composante du signal représentatif d'une consigne de couple à la roue immédiatement délivrable, dite couple dynamique correspondant au couple du groupe motopropulseur que le conducteur demande instantanément.

3. Dispositif selon la revendication 2, **caractérisé en ce que** le générateur (5) de couple statique travaille en fonction :

   - d'une liste enregistrée de paramètres définissant le profil du conducteur ;
   - d'une liste enregistrée de paramètres définissant le profil du véhicule dans le registre (1) des caractéristiques du véhicule ;
   - de l'état (3) de l'environnement du véhicule ainsi qu'il ressort de mesures faites sur l'état du véhicule dans son environnement.

4. Dispositif selon la revendication 3, **caractérisé en ce que** le générateur (5) de couple statique est alimenté par :

   - le paramètre Acond représentant le degré d'activité du conducteur estimé ou mesuré (en %) ;
   - le paramètre Cd représentant la composante dynamique Cd du couple à la roue demandé (en N.m) ;
   - le paramètre Cmax représentant le couple maximum que le gmp peut fournir soit instantanément, soit au régime moteur actuel (en N.m) ;
   - le paramètre Cr représentant le couple résistant estimé ou mesuré à vaincre pour maintenir le véhicule à vitesse constante (en N.m).

5. Dispositif selon la revendication 4, **caractérisé en ce que** le générateur (5) de couple statique Cs comporte un générateur pour construire une première valeur brute Cs_brut de la composante statique du couple à la roue demandé exprimée par :

$$Cs\_brut = MAX(Cr, Cdf) + Acond*[Cmax - MAX(Cr, Cdf)]$$

   où Cdf est le couple dynamique Cd filtré au moyen d'un filtre (50) et MAX() est un opérateur de maximum.

6. Dispositif selon la revendication 5, **caractérisé en ce que** le filtre (50) comporte un calculateur de moyenne glissante, la valeur de couple dynamique filtrée Cdf étant constituée par une moyenne arithmétique d'un nombre prédéterminé d'échantillons précédents de valeurs du couple dynamique présenté à l'entrée du filtre (50).

7. Dispositif selon l'une des revendications 5 ou 6, **caractérisé en ce que** le générateur de valeur brute (Cs_brut) comporte aussi un opérateur de recherche de maximum entre la valeur de couple dynamique filtrée issue du filtre (50) et la valeur (Cr) de couple à la roue, qui est mesurée par un capteur disposé sur le véhicule ou qui est calculée sur la base d'un estimateur logiciel de couple résistant à la roue.

8. Dispositif selon la revendication 5, **caractérisé en ce que** le générateur (5) de couple statique comporte aussi un opérateur MAX (55) qui comporte deux bornes d'entrée connectées respectivement à la borne de sortie du générateur (6) de couple dynamique et à la borne de sortie du générateur de valeur brute (Cs_brut).

9. Dispositif selon la revendication 2, **caractérisé en ce que** le générateur (6) de couple dynamique (Cd) comporte :

- une mémoire enregistrant le profil d'au moins un conducteur qui est connecté à un moyen pour détecter l'identité du conducteur présent aux commandes du véhicule et à un moyen pour mettre à jour le profil du conducteur en fonction des actions qu'il applique sur les organes de commande du véhicule ;
- une mémoire des paramètres du véhicule ou registre 1 ;
- de mémoires ou variables d'état représentant des signaux de sortie de capteurs convenables décrivant l'environnement du véhicule comme : la vitesse du véhicule, le couple résistant à la roue, l'accélération du véhicule, etc.

10. Dispositif selon la revendication 9, **caractérisé en ce que** le générateur (6) de couple dynamique est alimenté avec les trois informations suivantes :

- Posped représentant la position de la pédale d'accélérateur et qui subit un prétraitement de normalisation ;
- Cmax représentant le couple maximum que le groupe motopropulseur gmp (11) peut fournir instantanément au régime à la roue actuel (en N.m) ;
- Cmin représentant le couple minimum que le groupe motopropulseur gmp 11 peut fournir instantanément au régime à la roue actuel (en N.m)

les informations de couple Cmax et Cmin étant produites à l'aide de tables enregistrées qui sont adressées en fonction de la vitesse de rotation du moteur Nmt.

11. Dispositif selon la revendication 10, **caractérisé en ce que** le générateur (6) de couple dynamique (Cd) comporte un moyen de calcul dont la fonction s'exprime sous la forme littérale suivante :

$$Cd = Cmin + Posped*[Cmax - Cmin]$$

12. Dispositif selon la revendication 11, **caractérisé en ce que** le générateur (6) de couple dynamique comporte :

- un premier additionneur (56) dont une borne d'entrée positive reçoit à chaque instant la valeur représentative du couple maximum (Cmax) et dont une borne d'entrée reçoit à chaque instant la valeur représentative du couple minimum (Cmin) ;
- un multiplieur (57) dont une première borne d'entrée est connectée à la borne de sortie du premier additionneur (56) et dont une seconde borne d'entrée reçoit à chaque instant l'information de position de la pédale (Posped) ;
- un second additionneur (58) dont une première borne d'entrée positive est connectée à la borne de sortie du multiplieur (57) et dont une seconde borne d'entrée positive reçoit à chaque instant la valeur représentative du couple minimum (Cmin) et **en ce que** la borne de sortie du second additionneur (58) produit à chaque instant une valeur instantanée de couple dynamique (Cd).

13. Dispositif selon la revendication 1, **caractérisé en ce que** le premier module IVC (4) comporte aussi un générateur (16) d'un signal représentatif d'une limitation de variation du régime du moteur moyen pour réduire les variations acoustiquement gênantes du bruit de moteur que le conducteur attend.

14. Dispositif selon la revendication 13, **caractérisé en ce que** le générateur d'un signal représentatif d'une limitation de variation du régime du moteur du module IVC comporte :

- un générateur (61) d'une première composante du dit signal pour limiter les variations de régime moteur vers le sens de la réduction ; et
- un générateur (63) d'une seconde composante du dit signal pour limiter les variations de régime moteur vers le sens de l'augmentation.

**15.** Dispositif selon la revendication 14, **caractérisé en ce que** le générateur (16) comporte un module un bloc « 4 » (59) qui est alimenté avec les deux informations suivantes :

- Acond : qui représente le degré d'activité estimé ou mesuré du conducteur (en %) et qui est lue dans la mémoire enregistrant le profil d'au moins un conducteur ;.
- Vveh : La vitesse du véhicule (en km/h) et qui est lue ou interprétée sur les mémoires ou variables d'état représentant des signaux décrivant l'environnement du véhicule ;

et qui comporte un bloc « 5 » (60) et un bloc « 6 » (61), **en ce que** le bloc « 5 » (60) permet de construire une information Etat_veh qui définit l'état d'accélération du véhicule à partir de l'information Vveh, et **en ce que** le bloc « 6 » (61) comporte les deux générateurs (62, 63) des deux signaux de limitations positive et négative.

**16.** Dispositif selon la revendication 15, **caractérisé en ce que** le bloc "5" (60) comporte :

- une mémoire d'une valeur précédente de la vitesse du véhicule Vveh(t - Tv) et un opérateur de calcul de l'accélération instantanée a(t) du véhicule à la date t qui exécute la relation :

$$a(t) = [Vveh(t) - Vveh(t - Tv)] / Tv$$

dont le signal de sortie représente la valeur a(t) de l'accélération instantanée du véhicule à la date présente t ;
- une mémoire enregistrant une succession de valeurs de seuils d'accélération et/ou de décélération, respectivement (Seuil_acc) et/ou (Seuil_dec), mémoire qui est adressée par un module d'adressage sur la base du choix du type de caractère du véhicule enregistré dans le registre (1) de type du véhicule de sorte que les valeurs de seuil d'accélération et/ou de décélération (Seuil_acc) et/ou (Seuil_dec) rendent compte du type de véhicule désiré ;
- un module de test qui exécute les tests suivants :

Si (a(t) > Seuil_acc) Alors Etat_Vehic = 1;
Si (a(t) < Seuil_dec) Alors Etat_Vehic = -1;
Si ((a(t) <= Seuil_acc) Et (a(t) >= Seuil_dec)) Alors Etat_Vehic = 0.

**17.** Dispositif selon la revendication 14, **caractérisé en ce que** le bloc « 6 » (61) comporte deux blocs ( 62, 63) produisant deux signaux de limitation (lim_var_rpm_pos, lim_var_rpm_neg) définis par les relations :

$$lim\_var\_rpm\_pos = f1 \ (Acond, \ Etat\_veh)$$

$$lim\_var\_rpm\_neg = f2 \ (Acond, \ Etat\_veh)$$

dans lesquelles les fonctions « f1 » et « f2 » peuvent être réalisées aussi bien par des expressions algébriques que par des tables d'interpolation dont les paramètres sont déterminés de manière définitive lors de la mise au point du véhicule, de sorte que chaque fonction « f1 » et « f2 » est établie pour que la variation perçue par le conducteur soit qualifiée de "non gênante", les fonctions « f1 » et « f2 » étant prédéterminées par essais sur des populations "moyennes" de conducteurs, ou par sélection d'une fonction « f1 » et d'une fonction « f2 » parmi une pluralité de fonctions « f1 » et « f2 » enregistrées dans une mémoire du générateur (16) et sélectionnées selon la personnalité du conducteur détecté aux commandes du véhicule.

**18.** Dispositif selon la revendication 1, **caractérisé en ce que** le second module OPF (7) est composé de deux blocs :

- un module (65) qui exécute une fonction de "Choix du domaine d'optimisation" qui définit l'intervalle de régimes moteur sur lequel l'optimisation sera effectuée ;
- un module (66) d'optimisation proprement dit.
qui produit en sortie les coordonnées d'un point de fonctionnement appartenant au domaine de fonctionnement optimal, les deux coordonnées étant :
- Le couple à la roue Cr ;
- Le régime moteur N_new.

**19.** Dispositif selon la revendication 18, dans le cas où un élément de stockage d'énergie électrique figure dans le groupe motopropulseur gmp, **caractérisé en ce que** le second module OPF (7) comporte aussi un module (69) de gestion du stock d'énergie électrique.

**20.** Dispositif selon l'une des revendications 18 ou 19, **caractérisé en ce qu'**il comporte un moyen pour exécuter une fonction qui détermine les valeurs de couple à la roue Cr, soit :

$$Cr = Cr(N, Cmt, Vveh, Pbat)$$

dans laquelle Cr représente le couple aux roues, N le régime du moteur thermique, Vveh la vitesse du véhicule et Pbat la puissance fournie par la batterie.

**21.** Dispositif selon l'une des revendications 18 ou 19, **caractérisé en ce qu'**il comporte un moyen pour contrôler des limitations du groupe motopropulseur gmp (11) définies par les relations suivantes :

$$Nmin < Nm < Nmax \qquad (1)$$

$$Cmt < Cmt\_max \qquad (2)$$

$$Cmt\_max = Cmt\_max(Nmt) \qquad (3)$$

dans lesquelles sont imposées un régime de ralenti (Nmin) et une vitesse de rotation ou régime maximal (Nmax) et une fonction (Cmt_max()) de couple moteur maximal.

**22.** Dispositif selon l'une des revendications 18 à 21, **caractérisé en ce qu'**il comporte un moyen pour contrôler des limitations du groupe motopropulseur gmp (11) définies par les relations suivantes :

$$|Nme| < Nme\_max \qquad (4)$$

$$|Cme| < Cme\_max \qquad (5)$$

$$|Cme \times Nme| < Pme\_max \qquad (6)$$

dans lesquelles le groupe motopropulseur (11) comporte au moins un moteur électrique (ME1, ME2) présentant une vitesse maximale prédéterminée (Nme_max), une puissance électrique maximale prédéterminée (Pme_max) et un couple mécanique maximal prédéterminé (Cme_max).

**23.** Dispositif selon l'une des revendications 20 à 22, **caractérisé en ce que** le second module OPF (7) comporte une mémoire d'une cartographie Cr = Cr(Vveh) de couple à la roue déterminée à la construction du véhicule pouvant être connectée à un dispositif de mise à jour lors d'opérations de maintenance du véhicule ou à un dispositif d'adaptation lors de phases d'initialisation de la marche du véhicule.

**24.** Dispositif selon la revendication 23, **caractérisé en ce que** le second module OPF (7) comporte un moyen pour effectuer une recherche de la valeur maximale de couple à la roue (Cr) sur toutes les valeurs de couple délivrées par le moteur thermique (Cmt) soit une fonction Cr2() définie par la relation :

$$Cr2 = Cr2(N, Vveh, Pbat).$$

enregistrée dans une mémoire convenable du second module OPF (7) sous la forme Cr2 = Cr2(N, Vveh) couplée à un module d'inversion qui comporte deux opérateurs MAX, de recherche du maximum et MIN de recherche du minimum de sorte que soit produit des troisième et quatrième fonctions notées :

$$Nmin = Nmin(Cr2, Veh) = MIN\{N(Cr2, Veh)\} \qquad (7)$$

$$Nmax = Nmax(Cr2, Veh) = MAX\{N(Cr2, Veh)\}. \qquad (8)$$

dans lesquelles Nmin est, pour une vitesse du véhicule donnée, le régime minimal du moteur pour lequel le couple à la roue (Cr2) peut être réalisé ; Nmax est, pour une vitesse du véhicule donnée, le régime maximal du moteur pour lequel le couple à la roue (Cr2) peut être réalisé.

**25.** Dispositif selon la revendication 24, **caractérisé en ce que** le module (65) de choix de domaine d'optimisation comporte des moyens pour exécuter deux routines (81, 82) qui reçoivent en arguments des valeurs de vitesse du véhicule (Vveh) et de couple statique (Cs) d'une routine d'initialisation (80) et produisent à leurs sorties deux limitations minimale (Nmin()) et maximale (Nmax()) de l'intervalle de régime moteur imposé par le couple statique (Cs), implémentées sous la forme d'une mémoire à deux arguments d'adresse qui reproduit une cartographie des valeurs minimale (Nmin()) ou maximale (Nmax()) selon le cas pour un groupe motopropulseur gmp (11) donné, enregistrées au moins lors de la fabrication du véhicule et pouvant être remises à jour lors de la maintenance ou lors d'étapes de calibration lancées par le dispositif de contrôle (1-10).

**26.** Dispositif selon la revendication 24, **caractérisé en ce que** le module (65) de choix de domaine d'optimisation comporte des moyens pour exécuter une routine (85) qui reçoivent en arguments d'entrée une première valeur numérique de régime (Nneg) et une valeur de vitesse du véhicule (Vveh) fournies par une routine d'initialisation de boucle (80), la première valeur numérique de régime (Nneg) étant calculée par une opération (83) définie par la relation :

$$Nneg = (N\_old - lim\_rpm\_neg) \qquad (9)$$

recevant en arguments d'entrée les valeurs N_old, représentative du régime du moteur thermique mesuré lors du cycle de calcul précédent en sortie du troisième module (10) COS et lim_rpm_neg, représentative du gradient autorisé de variations du régime moteur par le générateur (16) du premier module IVC (4) et qui comportent des moyens, sur la base de la cartographie Cr2(N, Vveh) pour générer à chaque cycle une première valeur d'autorisation (Crneg) qui correspond au couple maximal aux roues pour la diminution maximale de régime autorisée.

**27.** Dispositif selon la revendication 24, **caractérisé en ce que** le module (65) de choix de domaine d'optimisation comporte des moyens pour exécuter une routine (86) qui reçoivent en arguments d'entrée une seconde valeur numérique de régime (Npos) et une valeur de vitesse du véhicule (Vveh) valeurs numériques fournies par une routine d'initialisation de boucle (80), la seconde valeur numérique de régime (Npos) étant calculée par une opération (84) définie par la relation :

$$Npos = (N\_old + lim\_rpm\_pos) \qquad (10)$$

recevant en arguments d'entrée les valeurs (N_old) représentative du régime du moteur thermique mesuré lors du cycle de calcul précédent en sortie du troisième module (10) COS et (lim_rpm_pos) représentative du gradient autorisé de variations du régime moteur par le générateur (16) du premier module IVC (4) et qui comportent des moyens, sur la base de la cartographie Cr2(N, Vveh), pour générer à chaque cycle une seconde valeur d'autorisation (Crpos) qui correspond au couple maximal aux roues pour l'augmentation maximale de régime autorisée.

28. Dispositif selon l'une des revendications 26 ou 27, **caractérisé en ce que** le module (65) de choix de domaine d'optimisation comporte des moyens pour exécuter une fonction de recherche du maximum entre deux arguments MAX() (87) qui reçoit en arguments d'entrée ladite première valeur d'autorisation (Crneg) produite par la routine (85) et ladite seconde valeur d'autorisation (Crpos) produite par la routine (86), et qui fournit une valeur CrDN, la plus grande valeur entre les premières et seconde valeurs d'autorisation (Crneg, Crpos), présentées aux entrées de la fonction MAX(), valeur correspondant au couple maximal aux roues respectant l'intervalle d'agrément [Nneg, Npos].

29. Dispositif selon la revendication 28, **caractérisé en ce que** le module (65) de choix de domaine d'optimisation comporte des moyens pour effectuer trois tests (88 - 90) qui sont respectivement :

   - un test (88) sur le paramètre CrDN : Cd < CrDN ;
   - un test (89) sur le paramètre Nmax : Nneg < Nmax ;
   - un test (90) sur le paramètre Nmin : Npos > Nmin.

30. Dispositif selon la revendication 29, **caractérisé en ce que** le module (65) de choix de domaine d'optimisation comporte des moyens pour effectuer une opération de combinaison logique ET exécutée dans une routine (91) entre les sorties à "VRAI" des tests (89, 90), de sorte que, si les deux conditions :

$$Npos > Nmin \qquad (11)$$

$$Nneg < Nmax \qquad (12)$$

sont simultanément vérifiées, l'intervalle du couple statique et l'intervalle d'agrément ont une intersection non vide, déterminée par une routine (101), définie par :

$$\Omega = [\ Ng\ ,\ Nr\ ] \qquad (13)$$

où :

$$Ng = MAX\ \{Nmin, Nneg\} \qquad (14)$$

$$Nr = MIN\ \{Nmax, Npos\}. \qquad (15)$$

Sont deux bornes limitant le domaine d'optimisation ($\Omega$).

31. Dispositif selon la revendication 30, **caractérisé en ce que** le module (65) de choix de domaine d'optimisation comporte des moyens pour tester la valeur de sortie de l'opération ET (91) pour déterminer si elle est VRAI par un test (92) à la valeur VRAI, dont une sortie est active si les conditions (11) et (12) des tests 89 et 90 sont vraies simultanément ; et **en ce que** une sortie VRAI du test (92) active un module (101) pour inscrire en entrée les bornes (Ng, Nr) du domaine d'optimisation(Ω) calculés selon les relations (14) et (15),

**en ce que** les limitations numériques (Nmin, Nmax) produites en sortie des routines (81 et 82), les première et seconde valeurs numériques de régime (Nneg, Npos), produites par les opérations (83 et 84) sont respectivement fournies aux entrées convenables des routines MAX (99) et MIN (100) selon les relations (14) et (15) précitées, de sorte que leurs valeurs de sortie soient transmises au module (101) qui mémorise le couple de valeurs (Ng, Nr), représentatif du domaine d'optimisation recherché et chargé comme tel dans un registre (98) de définition du domaine d'optimisation.

**32.** Dispositif selon la revendication 30 ou 31, **caractérisé en ce que** le module (65) de choix de domaine d'optimisation comporte des moyens pour tester si la sortie d'un opérateur ET (94) est fausse, pour que le module (97) soit activé et transmette les valeurs Nneg et Npos comme définition du domaine Ω au registre (98), la sortie FAUX du test (92) étant traitée par un inverseur NOT (93) dont la sortie est combinée dans ledit opérateur ET (94) avec la sortie VRAI du test (88), la sortie de l'opérateur (94) est testée à FAUX par un test (95) dont la sortie FAUX active le module (97).

**33.** Dispositif selon l'une des revendications 30 à 32, **caractérisé en ce que** le module (65) de choix de domaine d'optimisation comporte des moyens pour tester si la sortie de l'opérateur (94) est VRAI, pour que le module (96) soit activé et transmette les valeurs Nmin et Nmax comme définition du domaine Ω au registre (98), la routine (96) déterminant l'intersection non vide, définie par :

$$\Omega = [\text{Nmin} , \text{Nmax}];$$

l'intervalle de couple statique étant seul vérifié et la consigne d'agrément étant négligée.

**34.** Dispositif selon la revendication 1, **caractérisé en ce que** le générateur de couple statique (5), le générateur de couple dynamique (6) et/ou le générateur (16) d'un signal représentatif d'une limitation de variation du régime moteur comportent des organes d'entrée connectés à un module d'enregistrement des caractéristiques du véhicule et/ou du conducteur (1), à un module d'interface homme-machine transmettant les commandes produites par le conducteur et/ou par un automate de pilotage (2) et à un module de détection de l'état de l'environnement du véhicule (3) qui reçoit les valeurs descriptives de l'environnement du véhicule d'une pluralité de capteurs.

**35.** Dispositif selon la revendication 34, **caractérisé en ce que** les générateurs de couple statique (5), de couple dynamique (6) et/ou de limitation des variations de régime moteur (16) travaillent à des fréquences supérieures à la fréquence d'entrée des organes d'entrée du second module OPF (7) et/ou délivrent des valeurs de calculs intermédiaires lors d'un cycle de calcul, de sorte que sur des organes d'entrée intermédiaire du second module OPF (7) sont disponibles des valeurs intermédiaires des données d'entrée dudit second module OPF (7) qui sont transmises à des modules de calcul de modes transitoires du groupe motopropulseur et/ou des modules de calcul de valeurs d'anticipation des coordonnées du point de fonctionnement du groupe motopropulseur.

**36.** Dispositif selon la revendication 1, **caractérisé en ce que** le second moyen ou module OPF (7) comporte un générateur de valeurs de régime moteur (8) et un générateur de valeurs de couple (9) du groupe motopropulseur pour déterminer le point de fonctionnement du groupe motopropulseur, le régime moteur étant déterminé par un moyen exécutant une première fonction prédéterminée et le couple du groupe motopropulseur étant déterminé par un moyen exécutant une seconde fonction prédéterminée, les première et seconde fonctions mettant en oeuvre le critère d'optimisation et les contraintes de détermination du point de fonctionnement du groupe motopropulseur.

**37.** Dispositif selon la revendication 1, **caractérisé en ce que** le troisième module COS (10) comporte un générateur de consignes adaptées au type de groupe motopropulseur gmp (11) qu'il commande, de sorte que par programmation du module COS, le dispositif de contrôle peut être adapté à n'importe quel groupe motopropulseur parce qu'il reçoit en entrée deux (mode de réalisation de la figure 1a : N, C) ou trois (mode de réalisation de la figure 1b : N, C, Pbat) paramètres définissant à chaque instant le point de fonctionnement du groupe motopropulseur.

**Patentansprüche**

1. Vorrichtung zum Steuern des Arbeitspunkts des Antriebsaggregats eines Fahrzeugs, **dadurch gekennzeichnet, dass** sie im Wesentlichen Folgendes umfasst:

   - ein erstes Mittel oder Modul IVC (4), um in Abhängigkeit von einer Auslegung des Willens des Fahrers und des Zustands der Umgebung des Fahrzeugs ein Signal zu erzeugen, das für einen Drehmomentsollwert an dem Rad, der sofort von dem Antriebsaggregat geliefert werden kann, repräsentativ ist,
   - ein zweites Mittel oder Modul OPF (7), um die Koordinaten eines Arbeitspunkts des Antriebsaggregats zu erzeugen, der in Abhängigkeit von dem Signal ausgewählt ist, das für einen Drehmomentsollwert an dem Rad, der sofort von dem Antriebsaggregat geliefert werden kann, repräsentativ ist, der von dem Modul IVC (4) erzeugt wird, einerseits, und in Abhängigkeit von einem Signal, das für den Zustand der Umgebung des Fahrzeugs repräsentativ ist, der von einem Berücksichtigungsmodul der Umgebung des Fahrzeugs (3) erzeugt wird, andererseits, wobei der Arbeitspunkt in einem optimalen Betriebsbereich des Antriebsaggregats (11) festgelegt ist, der auf der Basis vorbestimmter Belastungen berechnet wird, die den Kraftstoffverbrauch, Fahrbequemlichkeitsauflagen und physikalische Auflagen, die als Einschränkungen der verschiedenen Organe des Antriebsaggregats und der Schadstoffemissionen vorab aufgezeichnet sind, umfassen, und
   - ein drittes Mittel oder Modul COS (10), um die Koordinaten dieses Arbeitspunkts in Steuersignale umzuwandeln, die an das Antriebsaggregat angepasst sind.

2. Vorrichtung nach Anspruch 1, **dadurch gekennzeichnet, dass** das Signal, das für einen Drehmomentsollwert an dem Rad, der sofort von dem Antriebsaggregat geliefert werden kann, repräsentativ ist, von einem Drehmomentsollwertgenerator an dem Rad erzeugt werden kann, der Folgendes umfasst

   - einen Generator (5) einer ersten Komponente des Signals, das für einen Drehmomentsollwert an dem Rad, der sofort geliefert werden kann, repräsentativ ist, statisches Drehmoment genannt, das dem maximalen Drehmoment entspricht, das an dem Antriebsaggregat verfügbar ist, über das der Fahrer sofort verfügen möchte,
   - einen Generator (6) einer zweiten Komponente des Signals, das für einen Drehmomentsollwert an dem Rad, der sofort geliefert werden kann, repräsentativ ist, dynamisches Drehmoment genannt, das dem Drehmoment des Antriebsaggregats, das der Fahrer sofort verlangt, entspricht.

3. Vorrichtung nach Anspruch 2, **dadurch gekennzeichnet, dass** der Generator (5) des statischen Drehmoments in Abhängigkeit von Folgendem arbeitet:

   - von einer aufgezeichneten Liste von Parametern, die das Profil des Fahrers definieren,
   - von einer aufgezeichneten Liste von Parametern, die das Profil des Fahrzeugs in dem Register (1) der Merkmale des Fahrzeugs definieren,
   - von dem Zustand (3) der Umgebung des Fahrzeugs, wie er aus Messungen hervorgeht, die auf dem Zustand des Fahrzeugs in seiner Umgebung erfolgen.

4. Vorrichtung nach Anspruch 3, **dadurch gekennzeichnet, dass** der Generator (5) des statischen Drehmoments versorgt wird von:

   • dem Parameter Acond, der den geschätzten oder gemessenen (in %) Aktivitätsgrad des Fahrers darstellt,
   • dem Parameter Cd, der die dynamische Komponente Cd des an dem Rad verlangten Drehmoments darstellt (in N.m),
   • dem Parameter Cmax, der das maximale Drehmoment darstellt, das das Antriebsaggregat entweder sofort oder bei der aktuellen Motordrehzahl liefern kann (in N.m),
   • dem Parameter Cr, der das geschätzte oder gemessene Widerstandsmoment darstellt, das zu überwinden ist, um das Fahrzeug auf konstanter Geschwindigkeit zu halten (in N.m).

5. Vorrichtung nach Anspruch 4, **dadurch gekennzeichnet, dass** der Generator (5) des statischen Drehmoments Cs einen Generator aufweist, um einen ersten Bruttowert Cs_brut der statischen Komponente des an dem Rad verlangten Drehmoments aufzubauen, ausgedrückt durch

$$Cs\_brut = MAX(Cr, Cdf) + Acond*[Cmax - MAX(Cr, Cdf)]$$

wobei Cdf das dynamische Drehmoment Cd ist, das mittels eines Filters (50) gefiltert wird, und MAX() ein Maximumoperator ist.

6. Vorrichtung nach Anspruch 5, **dadurch gekennzeichnet, dass** das Filter (50) einen Gleitmittelrechner umfasst, wobei der gefilterte dynamische Drehmomentwert Cdf aus einem arithmetischen Mittel einer vorbestimmten Anzahl vorhergehender Probenahmen dynamischer Drehmomentwerte zusammengesetzt ist, die an dem Eingang des Filters (50) präsentiert wird.

7. Vorrichtung nach einem der Ansprüche 5 oder 6, **dadurch gekennzeichnet, dass** der Bruttowertgenerator (Cs_brut) auch einen Maximumsuchoperator zwischen dem gefilterten dynamischen Drehmomentwert, der aus dem Filter (50) stammt, und dem Drehmomentwert (Cr) an dem Rad, der von einem Sensor gemessen wird, der auf dem Fahrzeug angeordnet ist, oder der auf der Basis eines Softwareschätzers des Widerstandsmoments an dem Rad berechnet wird, umfasst.

8. Vorrichtung nach Anspruch 5, **dadurch gekennzeichnet, dass** der Generator (5) des statischen Drehmoments auch einen MAX-Operator (55) umfasst, der zwei Eingangsklemmen umfasst, die jeweils an die Ausgangsklemme des Generators (6) des dynamischen Drehmoments und an die Ausgangsklemme des Bruttowertgenerators (Cs_brut) angeschlossen sind.

9. Vorrichtung nach Anspruch 2, **dadurch gekennzeichnet, dass** der Generator (6) des dynamischen Drehmoments (Cd) Folgendes umfasst:

   • einen Speicher, der das Profil mindestens eines Fahrers aufzeichnet, der an ein Mittel zum Erfassen der Identität des Fahrers angeschlossen ist, das an den Steuerelementen des Fahrzeugs vorhanden ist, und an ein Mittel, um das Profil des Fahrers in Abhängigkeit von den Aktionen, die er auf die Steuerorgane des Fahrzeugs anwendet, zu aktualisieren,
   • einen Speicher der Parameter des Fahrzeugs oder Register 1,
   • Speicher oder Zustandsvariablen, die Ausgangssignale von entsprechenden Fühlern darstellen, die die Umgebung des Fahrzeugs beschreiben als: die Geschwindigkeit des Fahrzeugs, das Widerstandsmoment an dem Rad, die Beschleunigung des Fahrzeugs usw.

10. Vorrichtung nach Anspruch 9, **dadurch gekennzeichnet, dass** der Generator (6) des dynamischen Drehmoments mit den drei folgenden Informationen versorgt wird:

   • Posped, die die Position des Gaspedals darstellt und einer Standardisierungsvorbehandlung unterzogen wird,
   • Cmax, die das maximale Drehmoment darstellt, das das Antriebsaggregat gmp (11) sofort bei der aktuellen Drehzahl an dem Rad liefern kann (in N.m),
   • Cmin, die das Mindestdrehmoment darstellt, das das Antriebsaggregat gmp (11) sofort bei der aktuellen Drehzahl an dem Rad liefern kann (in N.m),
   wobei die Drehmomentinformationen Cmax und Cmin mit Hilfe von Tabellen erzeugt werden, die aufgezeichnet und in Abhängigkeit von der Drehzahl des Motors Nmt adressiert sind.

11. Vorrichtung nach Anspruch 10, **dadurch gekennzeichnet, dass** der Generator (6) des dynamischen Drehmoments (Cd) ein Rechenmittel umfasst, dessen Funktion unter der folgenden wörtlichen Form ausgedrückt wird:

$$Cd = Cmin + Posped*[Cmax - Cmin]$$

12. Vorrichtung nach Anspruch 11, **dadurch gekennzeichnet, dass** der Generator (6) des dynamischen Drehmoments Folgendes umfasst:

   - einen ersten Addierer (56), von dem eine positive Eingangsklemme in jedem Augenblick den Wert empfängt, der für das maximale Drehmoment (Cmax) repräsentativ ist, und von dem eine Eingangsklemme in jedem Augenblick den Wert empfängt, der für das Mindestdrehmoment (Cmin) repräsentativ ist,

- einen Multiplizierer (57), von dem eine erste Eingangsklemme an die Ausgangsklemme des ersten Addierers (56) angeschlossen ist, und von dem eine zweite Eingangsklemme in jedem Augenblick die Positionsinformation des Pedals (Posped) empfängt,

- einen zweiten Addierer (58) von dem eine positive erste Eingangsklemme an die Ausgangsklemme des Multiplizierers (57) angeschlossen ist, und von dem eine zweite positive Eingangsklemme in jedem Augenblick den Wert empfängt, der für das Mindestdrehmoment (Cmin) repräsentativ ist, und dass die Ausgangsklemme des zweiten Addierers (58) in jedem Augenblick einen Sofortwert des dynamischen Drehmoments (Cd) erzeugt.

13. Vorrichtung nach Anspruch 1, **dadurch gekennzeichnet, dass** das erste Modul IVC (4) auch einen Generator (16) eines Signals umfasst, das für eine Variationsbeschränkung der mittleren Motordrehzahl repräsentativ ist, um die akustisch störenden Variationen des Motorgeräuschs, die der Fahrer erwartet, zu reduzieren.

14. Vorrichtung nach Anspruch 13, **dadurch gekennzeichnet, dass** der Generator eines Signals, das für eine Variationseinschränkung der Motordrehzahl des Moduls IVC repräsentativ ist, Folgendes umfasst:

- einen Generator (61) einer ersten Komponente des Signals, um die Variationen der Motordrehzahl in die Verringerungsrichtung einzuschränken, und
- einen Generator (63) einer zweiten Komponente des Signals, um die Variationen der Motordrehzahl in die Erhöhungsrichtung einzuschränken.

15. Vorrichtung nach Anspruch 14, **dadurch gekennzeichnet, dass** der Generator (16) ein Modul einen Block "4" (59) umfasst, der mit den zwei folgenden Informationen versorgt wird:

■ Acond: die den geschätzten oder gemessenen (in %) Aktivitätsgrad des Fahrers darstellt und in dem Speicher gelesen wird, der das Profil mindestens eines Fahrers aufzeichnet,
■ Vveh: die Geschwindigkeit des Fahrzeugs (in km/h) und die auf den Speichern oder Zustandsvariablen gelesen oder ausgelegt wird, die Signale darstellen, die die Umgebung des Fahrzeugs beschreiben,

und einen Block "5" (60) und einen Block "6" (61) umfasst, dass es der Block "5" (60) erlaubt, eine Information Etat_veh aufzubauen, die den Beschleunigungszustand des Fahrzeugs ausgehend von der Information Vveh definiert, und dass der Block "6" (61) die zwei Generatoren (62, 63) des positiven und negativen Einschränkungssignals umfasst.

16. Vorrichtung nach Anspruch 15, **dadurch gekennzeichnet, dass** der Block "5" (60) Folgendes umfasst:

- einen Speicher eines vorhergehenden Werts der Geschwindigkeit des Fahrzeugs Vveh(t - Tv) und einen Berechnungsoperator der Sofortbeschleunigung a(t) des Fahrzeugs zum Datum t, der die folgende Beziehung ausführt:

$$a(t) = [Vveh(t) - Vveh(t - Tv)] / Tv,$$

dessen Ausgangssignal den Wert a(t) der Sofortbeschleunigung des Fahrzeugs zu dem gegenwärtigen Datum t darstellt,

- einen Speicher, der eine Abfolge von Beschleunigungs- und/oder Verlangsamungsschwellenwerten, jeweils (Seuil_acc) und/oder (Seuil_dec) aufzeichnet, Speicher, der durch ein Adressiermodul auf der Basis der Auswahl des Charaktertyps des Fahrzeugs, der in dem Register (1) des Fahrzeugtyps aufgezeichnet ist, adressiert wird, so dass der Beschleunigungs- und/oder Verlangsamungsschwellenwert (Seuil_acc) und/oder (Seuil_dec) den gewünschten Fahrzeugtyp darstellen,

- ein Testmodul, das die folgenden Tests ausführt:

wenn (a(t) > Seuil_acc), dann Etat_Vehic = 1,
wenn (a(t) > Seuil_dec), dann Etat_Vehic = -1,
wenn ((a (t) <= Seuil_acc) und (a(t) >= Seuil_dec)), dann Etat_Vehic = 0.

**17.** Vorrichtung nach Anspruch 14, **dadurch gekennzeichnet, dass** der Block "6" (61) zwei Blöcke (62, 63) umfasst, die zwei Einschränkungssignale (lim_var_rpm_pos, lim_var_rpm_neg) erzeugen, die durch die folgenden Beziehungen definiert sind:

$$lim\_var\_rpm\_pos = f1 \ (Acond, \ Etat\_veh)$$

$$lim\_var\_rpm\_neg = f2 \ (Acond, \ Etat\_veh)$$

in welchen die Funktionen "f1" und "f2" sowohl durch algebraische Ausdrücke als auch durch Interpolationstabellen ausgedrückt werden können, deren Parameter definitiv bei der Optimierung des Fahrzeugs festgelegt werden, so dass die Funktionen "f1" und "f2" jeweils so festgelegt werden, dass die Variation, die der Fahrer wahrnimmt, als "nicht störend" qualifiziert wird, wobei die Funktionen "f1" und "f2" durch Versuche auf "durchschnittlichen" Populationen von Fahrern vorbestimmt werden oder durch Auswahl einer Funktion "f1" und einer Funktion "f2" aus mehreren Funktionen "f1" und "f2", die in einem Speicher des Generators (16) aufgezeichnet und gemäß der Persönlichkeit des Fahrers, der an den Steuerelementen des Fahrzeugs erfasst wird, ausgewählt werden.

**18.** Vorrichtung nach Anspruch 1, **dadurch gekennzeichnet, dass** das zweite Modul OPF (7) aus zwei Blöcken besteht:

- einem Modul (65), das eine "Optimierungsbereichauswahl"-Funktion ausführt und das Intervall von Motordrehzahlen definiert, auf welchen die Optimierung erfolgt,
- einem Modul (66) zur eigentlichen Optimierung, das am Ausgang die Koordinaten eines Arbeitspunkts erzeugt, der zu dem optimalen Betriebsbereich gehört, wobei die zwei Koordinaten die folgenden sind:
- das Drehmoment des Rads Cr,
- die Motordrehzahl N_new.

**19.** Vorrichtung nach Anspruch 18, in dem Fall, in dem ein Speicherelement für elektrische Energie in dem Antriebsaggregat gmp vorhanden ist, **dadurch gekennzeichnet, dass** das zweite Modul OPF (7) auch ein Modul (69) zur Verwaltung des Vorrats an elektrischer Energie umfasst.

**20.** Vorrichtung nach einem der Ansprüche 18 oder 19, **dadurch gekennzeichnet, dass** sie ein Mittel zum Ausführen einer Funktion umfasst, die die Werte des Drehmoments an dem Rad Cr bestimmt, nämlich:

$$Cr = Cr(N, \ Cmt, \ Vveh, \ Pbat),$$

in der Cr das Drehmoment an den Rädern, N die Drehzahl des Verbrennungsmotors, Vveh die Geschwindigkeit des Fahrzeugs und Pbat die Leistung darstellt, die von dem Akkumulator geliefert wird.

**21.** Vorrichtung nach einem der Ansprüche 18 oder 19, **dadurch gekennzeichnet, dass** sie ein Mittel zum Steuern der Einschränkungen des Antriebsaggregats gmp (11) umfasst, die durch die folgenden Beziehungen festgelegt sind:

$$Nmin \ < \ Nm \ < \ Nmax \qquad (1)$$

$$Cmt \ < \ Cmt\_max \qquad (2)$$

$$Cmt\_max \ = \ Cmt\_max \ (Nmt) \qquad (3),$$

in welchen eine Leerlaufdrehzahl (Nmin) und eine Drehzahl oder maximale Drehzahl (Nmax) und eine maximale Motordrehzahlfunktion (Cmt_max()) auferlegt sind.

22. Vorrichtung nach einem der Ansprüche 18 bis 21, **dadurch gekennzeichnet, dass** sie ein Mittel zum Steuern der Einschränkungen des Antriebsaggregats gmp (11) umfasst, die durch die folgenden Beziehungen festgelegt sind:

$$|Nme| \; < \; Nme\_max \qquad (4)$$

$$|Cme| \; < \; Cme\_max \qquad (5)$$

$$|Cme \; x \; Nme| \; < \; Pme\_max(6),$$

in welchen das Antriebsaggregat (11) mindestens einen Elektromotor (ME1, ME2) umfasst, der eine vorbestimmte maximale Drehzahl (Nme_max), eine vorbestimmte maximale elektrische Leistung (Pme_max) und ein vorbestimmtes maximales mechanisches Drehmoment (Cme_max) umfasst.

23. Vorrichtung nach einem der Ansprüche 20 bis 22, **dadurch gekennzeichnet, dass** das zweite Modul OPF (7) einen Speicher einer Drehmomentkartographie Cr = Cr(Vveh) an dem Rad umfasst, die beim Bauen des Fahrzeugs festgelegt wird, der an eine Aktualisierungsvorrichtung bei Wartungsvorgängen des Fahrzeugs oder an eine Anpassvorrichtung bei Initialisierungsphasen des Fahrens des Fahrzeugs angeschlossen werden kann.

24. Vorrichtung nach Anspruch 23, **dadurch gekennzeichnet, dass** das zweite Modul OPF (7) ein Mittel zum Ausführen einer Suche des Drehmomenthöchstwerts an dem Rad (Cr) auf allen von dem Verbrennungsmotor (Cmt) gelieferten Drehmomentwerten umfasst, nämlich eine Funktion Cr2(), die durch die folgende Beziehung definiert ist:

$$Cr2 \; = \; Cr2(N, \; Vveh, \; Pbat),$$

die in einem geeigneten Speicher des zweiten Moduls OPF (7) in der Form Cr2=Cr2(N, Vveh) aufgezeichnet ist, gekuppelt mit einem Umkehrmodul, das zwei Operatoren MAX zum Suchen des Maximums und MIN zum Suchen des Minimums derart aufweist, dass die folgende dritte und vierte Funktion erzeugt werden:

$$Nmin \; = \; Nmin(Cr2, \; Veh) \; = \; MIN\{N(Cr2, \; Veh)\} \qquad (7)$$

$$Nmax \; = \; Nmax(Cr2, \; Veh) \; = \; MAX\{N(Cr2, \; Veh)\} \qquad (8),$$

in welchen Nmin für eine gegebene Geschwindigkeit des Fahrzeugs die Mindestdrehzahl des Motors ist, für den das Drehmoment an dem Rad (Cr2) ausgeführt werden kann, Nmax für eine gegebene Fahrzeuggeschwindigkeit die maximale Drehzahl des Motors ist, für die das Drehmoment an dem Rad (Cr2) ausgeführt werden kann.

25. Vorrichtung nach Anspruch 24, **dadurch gekennzeichnet, dass** das Optimierungsbereichauswahlmodul (65) Mittel zum Ausführen von zwei Programmen (81, 82) umfasst, die als Argumente Geschwindigkeitswerte des Fahrzeugs (Vveh) und statischen Drehmoments (Cs) eines Initialisierungsprogramms (80) empfangen und an ihren Ausgängen eine Mindesteinschränkung (Nmin ( ) ) und eine Höchsteinschränkung (Nmax ( ) ) des Intervalls der Motordrehzahl erzeugen, das von dem statischen Drehmoment (Cs) auferlegt wird, die in Form eines Speichers mit zwei Adressargumenten umgesetzt sind, die eine Kartographie der Mindestwerte (Nmin ()) oder Höchstwerte (Nmax ()) je nach Fall für ein gegebenes Antriebsaggregat gmp (11) reproduzieren, die mindestens bei der Herstellung des Fahrzeugs aufgezeichnet werden und bei der Wartung oder bei Kalibrierungsschritten, die von der Steuervorrichtung (1-10) ausgelöst werden, aktualisiert werden können.

26. Vorrichtung nach Anspruch 24, **dadurch gekennzeichnet, dass** das Optimierungsbereichauswahlmodul (65) Mittel umfasst, um ein Programm (85) auszuführen, die als Eingangsargumente einen ersten numerischen Drehzahlwert (Nneg) und einen Geschwindigkeitswert des Fahrzeugs (Vveh) empfangen, die von einem Schleifeninitialisierungsprogramm (80) geliefert werden, wobei der erste numerische Drehzahlwert (Nneg) durch eine Operation (83) berechnet wird, die durch die folgende Beziehung definiert ist:

$$Nneg = (N\_old - lim\_rpm\_neg) \quad (9),$$

die als Eingangsargumente die Werte N_old, die für die Drehzahl des Verbrennungsmotors repräsentativ ist, die bei dem vorhergehenden Berechnungszyklus am Ausgang des dritten Moduls (10) COS gemessen wird, und lim_rpm_neg, repräsentativ für den zugelassenen Gradienten von Variationen der Motordrehzahl durch den Generator (16) des ersten Moduls IVC (4), und Mittel umfassen, um auf der Basis der Kartographie Cr2(N, Vveh) bei jedem Zyklus einen ersten Genehmigungswert (Crneg) zu erzeugen, der dem maximalen Drehmoment an den Rädern für die maximale zulässige Verringerung der Drehzahl entspricht.

27. Vorrichtung nach Anspruch 24, **dadurch gekennzeichnet, dass** das Optimierungsbereichauswahlmodul (65) Mittel umfasst, um ein Programm (86) auszuführen, die als Eingangsargumente einen zweiten numerischen Drehzahlwert (Npos) und einen Geschwindigkeitswert des Fahrzeugs (Vveh) empfangen, numerische Werte, die von einem Schleifeninitialisierungsprogramm (80) geliefert werden, wobei der zweite numerische Drehzahlwert (Npos) durch eine Operation (84) berechnet wird, die durch die folgende Beziehung definiert ist:

$$Npos = (N\_old + lim\_rpm\_pos) \quad (10),$$

die als Eingangsargumente die Werte N_old empfangen, die für die Drehzahl des Verbrennungsmotors repräsentativ ist, die bei dem vorhergehenden Berechnungszyklus am Ausgang des dritten Moduls (10) COS gemessen wird, und (lim_rpm_pos), repräsentativ für den zugelassenen Gradienten von Variationen der Motordrehzahl durch den Generator (16) des ersten Moduls IVC (4), und die Mittel umfassen, um auf der Basis der Kartographie Cr2(N, Vveh) bei jedem Zyklus einen zweiten Genehmigungswert (Crpos) zu erzeugen, der dem maximalen Drehmoment an den Rädern für die maximale zulässige Erhöhung der Drehzahl entspricht.

28. Vorrichtung nach einem der Ansprüche 26 oder 27, **dadurch gekennzeichnet, dass** das Optimierungsbereichauswahlmodul (65) Mittel umfasst, um eine Suchfunktion des Maximums zwischen zwei Argumenten MAX() (87) auszuführen, die als Eingangsargumente den ersten Genehmigungswert (Crneg) empfängt, der von dem Programm (85) erzeugt wird, und den zweiten Genehmigungswert (Crpos), der von dem Programm (86) erzeugt wird, und einen Wert CrDN liefert, wobei der größere Wert zwischen dem ersten und dem zweiten Genehmigungswert (Crneg, Crpos) an den Eingängen der Funktion MAX() präsentiert wird, wobei der Wert dem maximalen Drehmoment an den Rädern entspricht, der das Zulassungsintervall [Nneg,Npos] einhält.

29. Vorrichtung nach Anspruch 28, **dadurch gekennzeichnet, dass** das Optimierungsbereichauswahlmodul (65) Mittel umfasst, um drei Tests (88 - 90) auszuführen, nämlich jeweils:

   - einen Test (88) auf dem Parameter CrDN: Cd < CrDN,
   - einen Test (89) auf dem Parameter Nmax: Nneg < Nmax,
   - einen Test (90) auf dem Parameter Nmin: Npos > Nmin.

30. Vorrichtung nach Anspruch 29, **dadurch gekennzeichnet, dass** das Optimierungsbereichauswahlmodul (65) Mittel umfasst, um eine logische Kombinationsoperation ET auszuführen, die in einem Programm (91) zwischen den Ausgängen auf "WAHR" der Tests (89, 90) derart ausgeführt wird, dass die zwei Bedingungen

$$Npos > Nmin \qquad (11)$$

$$Nneg < Nmax \qquad (12)$$

gleichzeitig erfüllt werden, wobei das Intervall des statischen Drehmoments und das Bequemlichkeitsintervall eine Überschneidung haben, die nicht leer ist, die durch ein Programm (101) bestimmt wird, das definiert ist durch:

$$\Omega = [\ Ng,\ Nr] \qquad (13)$$

wobei:

$$Ng = MAX\ \{Nmin,\ Nneg\} \qquad (14)$$

$$Nr = MIN\ \{Nmax,\ Npos\} \qquad (15)$$

zwei Grenzen sind, die den Optimierungsbereich ($\Omega$) abgrenzen.

31. Vorrichtung nach Anspruch 30, **dadurch gekennzeichnet, dass** das Optimierungsbereichauswahlmodul (65) Mittel zum Testen des Ausgangswerts des Operators UND (91) umfasst, um durch einen Test (92) auf den Wert WAHR zu bestimmen, ob er wahr ist, von dem ein Ausgang aktiv ist, wenn die Bedingungen (11) und (12) der Tests 89 und 90 gleichzeitig wahr sind, und dass der Ausgang WAHR des Tests (92) ein Modul (101) aktiviert, um am Eingang die Limits (Ng, Nr) des Optimierungsbereichs ($\Omega$) zu schreiben, die gemäß den Beziehungen (14) und (15) berechnet wurden,
und dass diese numerischen Begrenzungen (Nmin, Nmax), die am Ausgang der Programme (81 und 82) erzeugt werden, der erste und der zweite numerische Drehzahlwert (Nneg, Npos), die von den Operationen (83 und 84) erzeugt werden, jeweils an die entsprechenden Eingänge der Programme MAX (99) und MIN (100) gemäß den oben erwähnten Beziehungen (14) und (15) derart geliefert werden, dass die Ausgangswerte an das Modul (101) übertragen werden, das das Paar von Werten (Ng, Nr) speichert, das für den gesuchten Optimierungsbereich repräsentativ ist und das so wie es ist in ein Definitionsregister (98) des Optimierungsbereichs geladen wird.

32. Vorrichtung nach Anspruch 30 oder 31, **dadurch gekennzeichnet, dass** das Optimierungsbereichauswahlmodul (65) Mittel umfasst, um zu testen, ob der Ausgang eines UND-Operators (94) falsch ist, damit das Modul (97) aktiviert wird und die Werte Nneg und Npos als Definition des Bereichs $\Omega$ an das Register (98) überträgt, wobei der Ausgang FALSCH des Tests (92) von einem Umkehrer NICHT (93) verarbeitet wird, dessen Ausgang in dem Operator UND (94) mit dem Ausgang WAHR des Tests (88) kombiniert ist, wobei der Ausgang des Operators (94) auf FALSCH durch einen Test (95), dessen Ausgang FALSCH das Modul (97) aktiviert, getestet wird.

33. Vorrichtung nach einem der Ansprüche 30 bis 32, **dadurch gekennzeichnet, dass** das Optimierungsbereichauswahlmodul (65) Mittel zum Testen, ob der Operator (94) WAHR ist, umfasst, damit das Modul (96) aktiviert wird und die Werte Nmin und Nmax als Definition des Bereichs $\Omega$ an das Register (98) überträgt, wobei das Programm (96) die Überschneidung nicht leer bestimmt, definiert durch:

$$\Omega = [Nmin\ ,\ Nmax];$$

wobei das Intervall des statischen Drehmoments allein geprüft und der Bequemlichkeitssollwert vernachlässigt wird.

34. Vorrichtung nach Anspruch 1, **dadurch gekennzeichnet, dass** der Generator (5) des statischen Drehmoments, der Generator (6) des dynamischen Drehmoments und/oder der Generator (16) eines Signals, das für eine Variationseinschränkung der Motordrehzahl repräsentativ ist, Eingangsorgane umfassen, die an ein Aufzeichnungsmodul der Merkmale des Fahrzeugs und/oder des Fahrers (1) angeschlossen sind, an eine Mensch-Maschine-Schnittstelle, die Befehle, die vom Fahrer und/oder von einem Steuerautomaten (2) erzeugt werden, überträgt und an ein Erfassungsmodul des Umgebungszustands des Fahrzeugs (3), das die beschreibenden Werte der Umgebung des Fahrzeugs von mehreren Sensoren erhält.

35. Vorrichtung nach Anspruch 34, **dadurch gekennzeichnet, dass** der Generator (5) des statischen Drehmoments, der Generator (6) des dynamischen Drehmoments und/oder der Generator zur Einschränkung der Variationen der Motordrehzahl (16) mit Frequenzen arbeiten, die höher sind als die Eingangsfrequenz der Eingangsorgane des zweiten Moduls OPF (7) und/oder Zwischenrechenwerte bei einem Rechenzyklus derart liefern, dass auf Zwischeneingangsorganen des zweiten Moduls OPF (7) Zwischenwerte der Eingangsdaten des zweiten Moduls OPF (7) verfügbar sind, die an Rechenmodule von Übergangsmodi des Antriebsaggregats und/oder Rechenmodule von Vorwegnahmewerten der Koordinaten des Arbeitspunkts des Antriebsaggregats übertragen werden.

36. Vorrichtung nach Anspruch 1, **dadurch gekennzeichnet, dass** das zweite Mittel oder Modul OPF (7) einen Generator von Motordrehzahlwerten (8) und einen Generator von Drehmomentwerten (9) des Antriebsaggregats umfasst, um den Arbeitspunkt des Antriebsaggregats zu bestimmen, wobei die Motordrehzahl durch ein Mittel bestimmt wird, das eine erste vorbestimmte Funktion ausführt, und das Drehmoment des Antriebsaggregats durch ein Mittel bestimmt wird, das eine zweite vorbestimmte Funktion ausführt, wobei die erste und die zweite Funktion das Optimierungskriteriumn und die Bestimmungsauflagen des Arbeitspunkts des Antriebsaggregats umsetzen.

37. Vorrichtung nach Anspruch 1, **dadurch gekennzeichnet, dass** das dritte Modul COS (10) einen Sollwertgenerator umfasst, der an den Typ des Antriebsaggregats gmp (11), das es steuert, derart angepasst ist, dass durch die Programmierung des Moduls COS die Steuervorrichtung an ein beliebiges Antriebsaggregat angepasst werden kann, weil es am Eingang zwei (Ausführungsmodus der Figur 1a: N, C) oder drei (Ausführungsmodus der Figur 1b: N, C, Pbat) Parameter empfängt, die in jedem Augenblick den Arbeitspunkt des Antriebsaggregats definieren.

**Claims**

1. Device for controlling the operating point of the power train of a vehicle, **characterized in that** it essentially includes:

   - a first means or module IVC (4) for generating, as a function of an interpretation of the will of the driver and of the state of the environment of the vehicle, a signal representative of a set point for the wheel torque immediately deliverable by the power train,
   - a second means or module OPF (7) for producing the co-ordinates of an operating point of the power train chosen as a function of the signal representative of a set point for the wheel torque immediately deliverable by the power train produced by the module IVC (4) on the one hand and as a function of a signal representative of the state of the environment of the vehicle produced by a module (3) taking account of the environment of the vehicle, on the other hand, the operating point being determined in an optimum range of operation of the power train (11) calculated on the basis of predetermined constraints comprising the fuel consumption, drivability constraints and pre-recorded physical constraints as limitations of the various units of the power train and the emission of pollutants; and
   - a third means or module COS (10) for translating the co-ordinates of this operating point into control signals suitable for the power train.

2. Device according to Claim 1, **characterized in that** the signal representative of a set point for the wheel torque immediately deliverable by the power train is produced by a wheel torque set point generator that includes:

   - a generator (5) of a first component of the signal representative of a set point for the wheel torque immediately deliverable, referred to as the static torque corresponding to the maximum torque available to the power train that the driver would wish to be instantaneously available,
   - a generator (6) of a second component of the signal representative of a set point for the wheel torque immediately deliverable, referred to as the dynamic torque corresponding to the power train torque that the driver demands instantaneously.

3. Device according to Claim 2, **characterized in that** the static torque generator (5) operates as a function of:

    - a stored list of parameters defining the profile of the driver;
    - a stored list of parameters defining the profile of the vehicle in the register (1) of the characteristics of the vehicle;
    - the state (3) of the environment of the vehicle as emerges from measurements effected on the state of the vehicle in its environment.

4. Device according to Claim 3, **characterized in that** the static torque generator (5) is supplied with:

- the parameter Acond representing the estimated or measured degree of activity of the driver (in %);
- the parameter Cd representing the dynamic component Cd of the demanded wheel torque (in N.m);
- the parameter Cmax representing the maximum torque (in N.m) that the power train can supply either instantaneously or at the current motor speed;
- the parameter Cr representing the estimated or measured resisting torque (in N.m) to be overcome to maintain the vehicle at constant speed.

5. Device according to Claim 4, **characterized in that** the generator (5) of the static torque Cs includes a generator for constructing a first raw value Cs_brut of the static component of the demanded wheel torque expressed by:

$$\texttt{Cs\_brut = MAX(Cr, Cdf) + Acond*[Cmax - MAX(Cr, Cdf)]}$$

where Cdf is the dynamic torque Cd filtered by means of a filter (50) and MAX() is a maximum operator.

6. Device according to Claim 5, **characterized in that** the filter (50) includes a sliding mean calculator, the filtered dynamic torque value Cdf being constituted by an arithmetic mean of a predetermined number of previous samples of values of the dynamic torque fed to the input of the filter (50).

7. Device according to either one of Claims 5 or 6, **characterized in that** the generator of the raw value (Cs_brut) also includes an operator seeking the maximum among the filtered dynamic torque value from the filter (50) and the wheel torque value (Cr), which is measured by a sensor disposed on the vehicle or which is calculated by software for estimating the resisting wheel torque.

8. Device according to Claim 5, **characterized in that** the static torque generator (5) also includes an operator MAX (55) which includes two input terminals respectively connected to the output terminal of the dynamic torque generator (6) and to the output terminal of the generator of the raw value (Cs_brut).

9. Device according to Claim 2, **characterized in that** the generator (6) of the dynamic torque (Cd) includes:

- a memory storing the profile of at least one driver which is connected to means for detecting the identity of the driver at the controls of the vehicle and means for updating the profile of the driver as a function of the actions that they apply to the controls of the vehicle;
- a memory for the parameters of the vehicle or register 1;
- memories or state variables representing output signals of appropriate sensors defining the environment of the vehicle such as: the speed of the vehicle, the resisting wheel torque, the acceleration of the vehicle, etc.

10. Device according to Claim 9, **characterized in that** the dynamic torque generator (6) is fed with the following information:

- Posped representing the position of the accelerator pedal and which undergoes normalization pre-processing;
- Cmax representing the maximum torque (in N.m) that the power train (11) can supply instantaneously at the current wheel speed;
- Cmin representing the minimum torque (in N.m) that the power train (11) can supply instantaneously at the current wheel speed

the torque information Cmax and Cmin being produced with the aid of stored tables that are addressed as a function of the engine rotation speed Nmt.

11. Device according to Claim 10, **characterized in that** the generator (6) of the dynamic torque (Cd) includes calculation means the function of which is expressed in the following literal form:

$$Cd = Cmin + Posped*[Cmax - Cmin].$$

12. Device according to Claim 11, **characterized in that** the dynamic torque generator (6) includes:

- a first adder (56) a positive input terminal of which receives the instantaneous value representative of the maximum torque (Cmax) and an input terminal of which receives the instantaneous value representative of the minimum torque (Cmin);
- a multiplier (57) a first input terminal of which is connected to the output terminal of the first adder (56) and a second input terminal of which receives the instantaneous pedal position information (Posped);
- a second adder (58) a first positive input of which is connected to the output terminal of the multiplier (57) and a second positive input of which receives the instantaneous value representative of the minimum torque (Cmin) and **in that** the output terminal of the second adder (58) produces an instantaneous dynamic torque value (Cd).

13. Device according to Claim 1, **characterized in that** the first module IVC (4) also includes a generator (16) of a signal representative of a mean engine speed variation limitation for reducing acoustic nuisance variations of the engine noise that the driver expects.

14. Device according to Claim 13, **characterized in that** the generator of a signal representative of an engine speed variation limitation of the module IVC includes:

- a generator (61) of a first component of said signal for limiting downward engine speed variations; and
- a generator (63) of a second component of said signal for limiting upward engine speed variations.

15. Device according to Claim 14, **characterized in that** the generator (16) includes a module a block "4" (59) which is fed with the following information:

■ Acond: which represents the estimated or measured degree of activity of the driver (in %) and which is read in the memory storing the profile of at least one driver;
■ Vveh: the speed of the vehicle (in km/h) and which is read or interpreted from the memories or state variables representing the signals defining the environment of the vehicle;
and which includes a block "5" (60) and a block "6" (61), **in that** the block "5" (60) enables construction of information Etat_veh that defines the acceleration state of the vehicle on the basis of the information Vveh, and **in that** the block "6" (61) includes the two generators (62, 63) of the positive and negative limitation signals.

16. Device according to Claim 15, **characterized in that** the block "5" (60) includes:

- a memory for a preceding value of the speed of the vehicle Vveh(t - Tv) and an operator for calculating the instantaneous acceleration a(t) of the vehicle at time t that executes the equation:

$$a(t) = [Vveh(t) - Vveh(t - Tv)]/Tv$$

the output signal of which represents the value a(t) of the instantaneous acceleration of the vehicle at the present time t;
- a memory storing a succession of values of acceleration and/or deceleration thresholds, respectively (Seuil_acc) and/or (Seuil_dec), which memory is addressed by an addressing module on the basis of the choice of the character type of the vehicle stored in the vehicle type register (1) so that the acceleration and/or deceleration threshold values (Seuil_acc) and/or (Seuil_dec) take account of the required vehicle type;
- a test module which executes the following tests:

```
If (a(t) > Seuil_acc) Then Etat_Vehic = 1;
If (a(t) < Seuil_dec) Then Etat_Vehic = -1;
If ((a(t) <=Seuil_acc) And (a(t) >= Seuil_dec)) Then Etat_Vehic = 0.
```

**17.** Device according to Claim 14, **characterized in that** the block "6" (61) includes two blocks (62, 63) producing two limitation signals (lim_var_rpm_pos, lim_var_rpm_neg) defined by the equations:

```
lim_var_rpm_pos = f1 (Acond, Etat_veh)
```

```
lim_var_rpm_neg = f2 (ACond, Etat_veh)
```

in which the functions "f1" and "f2" can be implemented equally well by algebraic expressions and by interpolation tables the parameters of which are determined in a definitive manner when tuning the vehicle, so that each function "f1" and "f2" is established so that the variation perceived by the driver is qualified "non nuisance", the functions "f1" and "f2" being predetermined by trials on "average" populations of drivers or by selection of a function "f1" and a function "f2" from a plurality of functions "f1" and "f2" stored in a memory of the generator (16) and selected in accordance with the personality of the driver detected at the controls of the vehicle.

**18.** Device according to Claim 1, **characterized in that** the second module OPF (7) is composed of two blocks:

- a module (65) which executes a "Choice of optimization domain" function which defines the range of engine speeds over which optimization will be effected;
- an optimization module (66) as such,
which produces as output the co-ordinates of an operating point in the optimum operating domain, the two co-ordinates being:

- the wheel torque Cr;
- the motor speed N_new.

**19.** Device according to Claim 18, in the case where an electrical energy storage element is included in the power train, **characterized in that** the second module OPF (7) also includes an electrical energy store management module (69).

**20.** Device according to either one of Claims 18 or 19, **characterized in that** it includes means for executing a function which determines the wheel torque values Cr, that is to say:

```
Cr = Cr(N, Cmt, Vveh, Pbat)
```

in which Cr represents the wheel torque, N the internal combustion engine speed, Vveh the speed of the vehicle and Pbat the power supplied by the battery.

**21.** Device according to either one of Claims 18 or 19, **characterized in that** it includes means for controlling the limitations of the power train (11) defined by the following equations:

$$Nmin<Nm<Nmax \qquad (1)$$

$$Cmt<Cmt\_max \qquad (2)$$

$$Cmt\_max = Cmt\_max(Nmt) \qquad (3)$$

in which are imposed an idling speed (Nmin) and a maximum rotation speed or speed (Nmax) and a maximum engine torque function (Cmt_max()).

22. Device according to any one of Claims 18 to 21, **characterized in that** it includes means for controlling the limitations of the power train (11) defined by the following equation:

$$|Nme| < Nme\_max \qquad (4)$$

$$|Cme| < Cme\_max \qquad (5)$$

$$|Cme_x Nme| < Pme\_max \qquad (6)$$

in which the power train (11) includes at least one electric motor (ME1, ME2) having a predetermined maximum speed (Nme_max), a predetermined maximum electrical power (Pme_max) and a predetermined maximum mechanical torque (Cme_max).

23. Device according to any one of Claims 20 to 22, **characterized in that** the second module OPF (7) includes a memory for a wheel torque map Cr = Cr(Vveh) determined by the manufacturer of the vehicle that can be connected to an updating device during vehicle maintenance operations or to an adaptation device when setting up the vehicle.

24. Device according to Claim 23, **characterized in that** the second module OPF (7) includes means for effecting a search for the maximum wheel torque value (Cr) over all the torque values delivered by the internal combustion engine (Cmt) that is to say a function Cr2() defined by the equation:

$$Cr2 = Cr2(N, Vveh, Pbat).$$

stored in an appropriate memory of the second module OPF (7) in the form Cr2 = Cr2 (N, Vveh) coupled to an inverter module which includes a maximum search operator MAX and a minimum search operator MIN so that third and fourth functions are produced as follows:

$$Nmin = Nmin(Cr2, Veh) = MIN\{N(Cr2, Veh)\} \qquad (7)$$

$$Nmax = Nmax(Cr2, Veh) = MAX\{N(Cr2, Veh)\} \qquad (8)$$

in which Nmin is, for a given speed of the vehicle, the minimum engine speed for which the wheel torque (Cr2) can be produced; Nmax is, for a given speed of the vehicle, the maximum engine speed for which the wheel torque (Cr2) can be produced.

25. Device according to Claim 24, **characterized in that** the module (65) for choosing the optimization domain includes means for executing two routines (81, 82) that receive as arguments values of vehicle speed (Vveh) and of static torque (Cs) from an initialization routine (80) and produce at their outputs a minimum limitation (Nmin ( )) and a maximum limitation (Nmax ( )) of the range of engine speed imposed by the static torque (Cs), implemented in the form of a memory with two address arguments which reproduces a map of the minimum values (Nmin ( )) or maximum values (Nmax ( )) as appropriate for a given power train (11), stored at least at the time of manufacture of the vehicle and adapted to be updated during maintenance or during calibration steps launched by the control device (1-10).

26. Device according to Claim 24, **characterized in that** the module (65) for choosing the optimization domain includes means for executing a routine (85) which receive as input arguments a first speed numerical value (Nneg) and a vehicle speed value (Vveh) supplied by a loop initialization routine (80), the first speed numerical value (Nneg) being calculated by an operation (83) defined by the equation:

$$Nneg = (N\_old - lim\_rpm\_neg) \qquad (9)$$

receiving as input arguments the values N_old, representative of the speed of the internal combustion engine measured during the preceding calculation cycle at the output of the third module COS (10), and lim_rpm_neg, representative of the gradient of engine speed variations authorized by the generator (16) of the first module IVC (4), and which include means for generating in each cycle on the basis of the map Cr2 (N, Vveh) a first authorization value (Crneg) which corresponds to the maximum wheel torque for the authorized maximum speed reduction.

27. Device according to Claim 24, **characterized in that** the module (65) for choosing the optimization domain includes means for executing a routine (86) which receive as input arguments a second speed numerical value (Npos) and a vehicle speed value (Vveh), numerical values supplied by a loop initialization routine (80), the second speed numerical value (Npos) being calculated by an operation (84) defined by the equation:

$$Npos = (N\_old + lim\_rpm\_pos) \qquad (10)$$

receiving as input arguments the values (N_old) representative of the speed of the internal combustion engine measured during the preceding calculation cycle at the output of the third module COS (10) and (lim_rpm_pos) representative of the gradient of engine speed variations authorized by the generator (16) of the first module IVC (4) and which include means for generating in each cycle on the basis of the map Cr2(n, Vveh) a second authorization value (Crpos) which corresponds to the maximum wheel torque for the authorized maximum speed increase.

28. Device according to either one of Claims 26 or 27, **characterized in that** the module (65) for choosing the optimization domain includes means MAX() (87) for executing a function for searching for the maximum of two arguments which receive as input arguments said first authorization value (Crneg) produced by the routine (85) and said second authorization value (Crpos) produced by the routine (86) and which supplies a value CrDN, the greater of the first and second authorization values (Crneg, Crpos), fed to the inputs of the function MAX(), value corresponding to the maximum wheel torque conforming to the drivability range [Nneg, Npos].

29. Device according to Claim 28, **characterized in that** the module (65) for choosing the optimization domain includes means for effecting three tests (88-90), respectively:

- a test (88) on the parameter CrDN: Cd < CrDN;
- a test (89) on the parameter Nmax : Nneg < Nmax;
- a test (90) on the parameter Nmin : Npos > Nmin.

30. Device according to Claim 29, **characterized in that** the module (65) for choosing the optimization domain includes means for effecting a logical combination operation AND executed in a routine (91) between the "TRUE" outputs of the tests (89, 90), so that, if the two conditions:

$$Npos > Nmin \qquad (11)$$

$$Nneg < Nmax \qquad (12)$$

are verified simultaneously, the static torque range and the drivability range have a non-empty intersection, determined by a routine (101), defined by:

$$\Omega = [Ng, Nr] \qquad (13)$$

in which:

$$Ng = MAX \{Nmin, Nneg\} \qquad (14)$$

$$Nr = MIN \{Nmax, Npos\} \qquad (15)$$

are two bounds limiting the optimization domain ($\Omega$).

**31.** Device according to Claim 30, **characterized in that** the module (65) for choosing the optimization domain includes means for testing the output value of the AND operation (91) to determine if it is TRUE by a TRUE test (92), an output of which is active if the conditions (11) and (12) of the tests 89 and 90 are true simultaneously, and **in that** a TRUE output of the test (92) activates a module (101) for writing as input the bounds (Ng, Nr) of the optimization domain ($\Omega$) calculated in accordance with the equations (14) and (15),

**in that** the numerical limitations (Nmin, Nmax) produced at the output of the routines (81 and 82), the first and second speed numerical values (Nneg, Npos), produced by the operations (83 and 84) are respectively supplied to the appropriate inputs of the routines MAX (99) and MIN (100) in accordance with the aforementioned equations (14) and (15), so that their output values are transmitted to the module (101) which stores the pair of values (Ng, Nr) representative of the optimization domain looked for and loaded as such into a register (98) defining the optimization domain.

**32.** Device according to Claim 30 or 31, **characterized in that** the module (65) for choosing the optimization domain includes means for testing if the output of an AND operator (94) is false, so that the module (97) is activated and transmits the values Nneg and Npos as a definition of the domain $\Omega$ to the register (98), the FALSE output of the test (92) being processed by a NOT inverter (93) the output of which is combined in said AND operator (94) with the TRUE output of the test (88), the output of the operator (94) is tested FALSE by a test (95) the FALSE output of which activates the module (97).

**33.** Device according to any one of Claims 30 to 32, **characterized in that** the module (65) for choosing the optimization domain includes means for testing if the output of the operator (94) is TRUE, so that the module (96) is activated and transmits the values Nmin and Nmax as a definition of the domain $\Omega$ to the register (98), the routine (96) determining the non-empty intersection defined by:

$$\Omega = [Nmin, Nmax];$$

the static torque range alone being verified and the drivability set point being ignored.

**34.** Device according to Claim 1, **characterized in that** the static torque generator (5), the dynamic torque generator (6) and/or the generator (16) of a signal representative of an engine speed variation limitation include input units connected to a module (1) for storing characteristics of the vehicle and/or the driver, to a man-machine interface module (2) for transmitting control input from the driver and/or an automatic driver and to a module (3) for detecting the state of the environment of the vehicle which receives the values descriptive of the environment of the vehicle from a plurality of sensors.

**35.** Device according to Claim 34, **characterized in that** the generators (5) of the static torque, (6) of the dynamic torque and/or (16) of the engine speed variations limitation function at frequencies greater than the input frequency of the input units of the second module OPF (7) and/or deliver intermediate calculation values during a calculation cycle so that at the intermediate input units of the second module OPF (7) there are available intermediate values of the input data of said second module OPF (7) which is transmitted to modules for calculating transient modes of the power train and/or modules for calculating look-ahead values of the co-ordinates of the operating point of the power train.

**36.** Device according to Claim 1, **characterized in that** the second means of module OPF (7) includes a generator (8) of engine speed values and a generator (9) of power train torque values for determining the operating point of the power train, the engine speed being determined by means executing a predetermined first function and the power train torque being determined by means executing a predetermined second function, the first and second functions employing the optimization criterion and the constraints on determination of the operating point of the power train.

**37.** Device according to Claim 1, **characterized in that** the third module COS (10) includes a generator of set points appropriate to the type of power train (11) which it controls so that by programming the module COS the control device can be adapted to any power train because it receives as input two parameters (Figure 1a embodiment: N, C) or three parameters (Figure 1b embodiment: N, C, Pbat) defining the instantaneous operating point of the power train.

## Figure 1a

## Figure 1b

## Figure 2

## Figure 3

## Figure 4

Acond

Cmax

Cr

Cd

1

Cs

## Figure 5

Acond

Cmax

Cr

Cd

2

Cs_brut

3

Cs

## Figure 6

Acond

Cmax

52

53

54

+ / −

x

+ / +

Cs_brut

Cr

max

51

Cdf

50

Filtre

Cd

Bloc « 2 »

## Figure 7

Cs_brut

55

max

Cs

Cd

Bloc « 3 »

## Figure 8

Posped

Cmax

56

57

58

+

−

X

+

+

Cd

Cmin

## Figure 9

59

Acond

Vveh

4

lim_var_rpm_pos

lim_var_rpm_neg

## Figure 10

Vveh → [ **5** ] 60

Etat_veh

[ **6** ] 61

Acond →

→ lim_var_rpm_pos

→ lim_var_rpm_neg

## Figure 11

Acond →
Etat_veh →

[ **7** ] 62

→ lim_var_rpm_pos

[ **8** ] 63

→ lim_var_rpm_neg

## Figure 12

lim_rpm_pos
lim_rpm_neg

N_old      Cs               Vveh    Cd

| Choix domaine d'optimisation | Domaine Ω → | Optimisation |

65                    66

N_new         Cr

67

**(Variante A)**

68

lim_rpm_pos
lim_rpm_neg

N_old     Cs      Cd    Vveh    SOC

| Choix domaine d'optimisation | | Gestion batterie |

65     Domaine Ω   Vveh   Cd   Pbat    69

| Optimisation |

70

N_new        Pbat     Cr

**(Variante B)**          71

## Figure 13

(a)

(b)

## Figure 14

(a)

(b)

**Figure 15**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19703863
- FR 0017356
- FR 0000285
- FR 0006003